# EUROPEAN PATENT APPLICATION

(11) **EP 4 637 191 A1**
(43) Date of publication of application: **22.10.2025**
(21) Application number: 24738564.4
(22) Date of filing: 05.01.2024
(51) Int. Cl.: H04W 4/06

(54) **COMMUNICATION METHOD AND APPARATUS**

(30) Priority: 08.01.2023 CN 202310022810
(71) Applicant: Huawei Technologies Co., Ltd., Shenzhen, Guangdong 518129 (CN)
(72) Inventor: ZHANG, Haisen, Shenzhen, Guangdong 518129 (CN); LI, Bingzhao, Shenzhen, Guangdong 518129 (CN); XU, Bin, Shenzhen, Guangdong 518129 (CN); WU, Wenbin, Shenzhen, Guangdong 518129 (CN); LIU, Nannan, Shenzhen, Guangdong 518129 (CN); CHEN, Lei, Shenzhen, Guangdong 518129 (CN)
(74) Representative: Goddar, Heinz J.
(86) International application number: PCT/CN2024/070813
(87) International publication number: WO 2024/146633

(57) **Abstract**

A communication method and a communication apparatus are provided. The method may include: A terminal device receives indication information; and the terminal device determines, based on the indication information, whether to enable receiving of retransmission of downlink multicast transmission when the terminal device is in an inactive state or an idle state. In this way, the terminal device can receive the retransmission of the downlink multicast transmission in the RRC inactive state or idle state, thereby helping improve quality of receiving the downlink multicast transmission by the terminal device in the inactive state or the idle state.

## Description

### TECHNICAL FIELD

Embodiments of this application relate to the communication field, and more specifically, to a communication method and apparatus.

### BACKGROUND

Multicast and broadcast services (multicast and broadcast service, MBS) may simultaneously provide data for a large quantity of users with a same requirement through a small quantity of resources, so that network resources can be shared. In the 3rd generation partnership project (3rd generation partnership project, 3GPP) release 17 (release, R17), a terminal device receives multicast in a connected state. For a terminal device that joins an MBS session and is in a connected state, a network device may first send a multicast configuration to the terminal device. Further, the terminal device may receive downlink multicast transmission based on the multicast configuration.

To alleviate network congestion, it is proposed in R18 that a terminal device receives multicast in a radio resource control (radio resource control, RRC) inactive (inactive) state. For example, when the terminal device has no unicast service and receives only a multicast service, a network may release the terminal device to the inactive state, and the terminal device may receive downlink multicast transmission in the inactive state. In this way, a quantity of terminal devices in a connected state in the network can be reduced. This not only helps alleviate network congestion, but also helps save energy of the terminal device.

However, how to ensure, as much as possible, quality of receiving the downlink multicast transmission by the terminal device in the inactive state is an urgent problem to be resolved.

### SUMMARY

This application provides a communication method and apparatus, so that a terminal device can receive, in a non-connected state, retransmission of downlink multicast transmission triggered by a terminal device in a connected state, thereby helping improve quality of receiving the downlink multicast transmission by the terminal device in the non-connected state, and improving receiving quality of a multicast service.

According to a first aspect, a communication method is provided. The method may be performed by a terminal device, or may be performed by a component (for example, a chip or a circuit) of the terminal device. This is not limited in this application.

The method may include: A terminal device receives indication information; and the terminal device determines, based on the indication information, whether to enable (enable) receiving of retransmission of downlink multicast transmission when the terminal device is in an inactive state or an idle state.

According to the method, the terminal in a non-connected state may determine whether a network enables a retransmission mechanism, and determine whether the network may send the retransmission, so that the terminal can determine whether to enable receiving of the retransmission of the downlink multicast transmission. In this way, the terminal can monitor a downlink channel based on a requirement of receiving the retransmission of the terminal, thereby reducing energy consumption of the terminal. According to the technical solution in this embodiment of this application, when the terminal in the non-connected state cannot perform HARQ feedback, the terminal device can receive, in the non-connected state, the retransmission of the downlink multicast transmission sent by a network device, thereby helping improve quality of receiving the downlink multicast transmission by the terminal device in the non-connected state, and improving receiving quality of a multicast service.

In a possible design, the indication information is carried in downlink scheduling information DCI.

According to the method, an indication indicating whether to enable receiving of the retransmission of the downlink multicast transmission may be updated each time scheduling transmission is performed, thereby improving indication flexibility.

In a possible design, the method further includes: The terminal device receives configuration information, where the configuration information indicates that the indication information in the DCI is valid, or the configuration information indicates that the DCI includes the indication information.

According to the method, an indication level or an indication frequency can be flexibly adjusted, so that the indication can be more flexibly performed by using the DCI as required, and the indication can be performed through an MCCH, RRC signaling, or the like in another case, thereby saving scheduling resources.

In a possible design, the configuration information is carried in radio resource control RRC signaling, or is carried on a multicast and broadcast service control channel MCCH.

In a possible design, the configuration information is hybrid automatic repeat request HARQ feedback enabling information.

In a possible design, the method further includes: The terminal device receives configuration information of a timer, where the timer is used to receive the retransmission of the downlink multicast transmission when the terminal device is in the inactive state or the idle state.

In a possible design, the indication information is carried in radio resource control RRC signaling, or is carried on a multicast and broadcast service control channel MCCH.

In a possible design, the indication information is HARQ feedback enabling information; and when the HARQ feedback enabling information indicates a first state, the indication information indicates to enable receiving of the retransmission of the downlink multicast transmission when the terminal device is in the inactive state or the idle state.

In a possible design, the method further includes: The terminal device receives configuration information of a timer, where the timer is used to receive the retransmission of the downlink multicast transmission when the terminal device is in the inactive state or the idle state.

In a possible design, the indication information is configuration information of a timer, and the timer is used to receive the retransmission of the downlink multicast transmission when the terminal device is in the inactive state or the idle state; and the method includes: The terminal device determines, based on the configuration information of the timer, whether to enable receiving of the retransmission of the downlink multicast transmission.

According to the method, no additional indication parameter is required to indicate whether to enable receiving of the retransmission, so that signaling resource overheads can be reduced.

In a possible design, the configuration information of the timer includes configuration information of a first timer, and the first timer is used to receive the retransmission of the downlink multicast transmission when the terminal device is in the inactive state or the idle state; and the method further includes: The terminal device receives first information, where the first information indicates a first moment; the terminal device starts the first timer after the first moment; and the terminal device detects a physical downlink control channel PDCCH in a running period of the first timer.

According to the method, when the terminal in the non-connected state does not send a HARQ feedback, the terminal can determine a retransmission receiving occasion. An advantage of this is that the terminal device can determine time for starting a retransmission-related timer, and can monitor the PDCCH in more accurate time, thereby better receiving retransmitted data, and improving multicast receiving quality. According to the method, the network can schedule transmission of the retransmitted data based on a time position at which the terminal in the non-connected state receives the retransmission, so that the terminal in the non-connected state can normally receive the retransmission, thereby improving multicast receiving quality.

In a possible design, the first information is carried in downlink scheduling information DCI.

In a possible design, the configuration information of the timer includes configuration information of a second timer, and the second timer indicates that the terminal device does not need to perform PDCCH detection in a running period of the second timer; and the method further includes: The terminal device starts the second timer after the first moment; the terminal device starts the first timer after the second timer expires; and the terminal device detects a physical downlink control channel PDCCH in the running period of the first timer.

In a possible design, the method further includes: The terminal device receives the retransmission of the downlink multicast transmission when the terminal device determines to enable receiving of the retransmission of the downlink multicast transmission, and the terminal device fails to decode the downlink multicast transmission.

According to a second aspect, a communication method is provided. The method may be performed by a network device, or may be performed by a component (for example, a chip or a circuit) of the network device. This is not limited in this application.

The method may include: sending indication information, where the indication information indicates whether a terminal device enables receiving of retransmission of downlink multicast transmission when the terminal device is in an inactive state or an idle state.

According to the method, the terminal in a non-connected state may determine whether a network enables a retransmission mechanism, and determine whether the network may send the retransmission, so that the terminal can determine whether to enable receiving of the retransmission of the downlink multicast transmission. In this way, the terminal can monitor a downlink channel based on a requirement of receiving the retransmission of the terminal, thereby reducing energy consumption of the terminal. According to the technical solution in this embodiment of this application, when the terminal in the non-connected state cannot perform HARQ feedback, the terminal device can receive, in the non-connected state, the retransmission of the downlink multicast transmission sent by the network device, thereby helping improve quality of receiving the downlink multicast transmission by the terminal device in the non-connected state, and improving receiving quality of a multicast service.

In a possible design, the indication information is carried in downlink scheduling information DCI.

According to the method, an indication indicating whether to enable receiving of the retransmission of the downlink multicast transmission may be updated each time scheduling transmission is performed, thereby improving indication flexibility.

In a possible design, the method further includes: sending configuration information, where the configuration information indicates that the indication information in the DCI is valid, or the configuration information indicates that the DCI includes the indication information.

According to the method, an indication level or an indication frequency can be flexibly adjusted, so that the indication can be more flexibly performed by using the DCI as required, and the indication can be performed through an MCCH, RRC signaling, or the like in another case, thereby saving scheduling resources.

In a possible design, the configuration information is carried in radio resource control RRC signaling, or is carried on a multicast and broadcast service control channel MCCH.

In a possible design, the configuration information is hybrid automatic repeat request HARQ feedback enabling information.

In a possible design, the method further includes: sending configuration information of a timer, where the timer is used to receive the retransmission of the downlink multicast transmission when the terminal device is in the inactive state or the idle state.

In a possible design, the indication information is carried in radio resource control RRC signaling, or is carried on a multicast and broadcast service control channel MCCH.

In a possible design, the indication information is HARQ feedback enabling information; and when the HARQ feedback enabling information indicates a first state, the indication information indicates to enable receiving of the retransmission of the downlink multicast transmission when the terminal device is in the inactive state or the idle state.

In a possible design, the method further includes: sending configuration information of a timer, where the timer is used to receive the retransmission of the downlink multicast transmission when the terminal device is in the inactive state or the idle state.

In a possible design, the indication information is configuration information of a timer, and the timer is used to receive the retransmission of the downlink multicast transmission when the terminal device is in the inactive state or the idle state; and the method includes: indicating, by using the configuration information of the timer, whether to enable receiving of the retransmission of the downlink multicast transmission.

According to the method, no additional indication parameter is required to indicate whether to enable receiving of the retransmission, so that signaling resource overheads can be reduced.

In a possible design, the configuration information of the timer includes configuration information of a first timer, and the first timer indicates the terminal device to receive the retransmission of the downlink multicast transmission in a running period of the first timer; and the method further includes: sending first information, where the first information indicates a first moment; starting the first timer after the first moment; and scheduling the retransmission of the downlink multicast transmission in the running period of the first timer.

According to the method, when the terminal in the non-connected state does not send a HARQ feedback, the terminal can determine a retransmission receiving occasion. An advantage of this is that the terminal device can determine time for starting a retransmission-related timer, and can monitor the PDCCH in more accurate time, thereby better receiving retransmitted data, and improving multicast receiving quality. According to the method, the network can schedule transmission of the retransmitted data based on a time position at which the terminal in the non-connected state receives the retransmission, so that the terminal in the non-connected state can normally receive the retransmission, thereby improving multicast receiving quality.

In a possible design, the first information is carried in downlink scheduling information DCI.

In a possible design, the configuration information of the timer includes configuration information of a second timer, and the second timer indicates that the terminal device does not need to perform PDCCH detection in a running period of the second timer; and the method further includes: starting the second timer after the first moment; starting the first timer after the second timer expires; and scheduling the retransmission of the downlink multicast transmission in the running period of the first timer.

Correspondingly, this application further provides a communication device, and the device may implement the communication method according to either the first aspect or the second aspect. For example, the device may be a terminal device or a network device, or may be another device that can implement the foregoing communication method. The device may implement the foregoing method by software, hardware, or hardware executing corresponding software.

In a possible design, the device may include a processor and a memory. The processor is configured to support the device in performing a corresponding function in the method according to any one of the foregoing aspects. The memory is configured to be coupled to the processor, and stores program instructions and data that are necessary for the device. In addition, the device may further include a communication interface, configured to support communication between the device and another device. The communication interface may be a transceiver or a transceiver circuit.

According to another aspect, an embodiment of this application provides a communication system, and the system includes the communication device according to the foregoing aspects.

Still another aspect of this application provides a computer-readable storage medium. The computer-readable storage medium stores instructions. When the instructions are run on a computer, the computer is enabled to perform the method according to the foregoing aspects.

Still another aspect of this application provides a computer program product including instructions. When the computer program product runs on a computer, the computer is enabled to perform the method according to the foregoing aspects.

This application further provides a chip system. The chip system includes a processor, and may further include a memory. The chip system is configured to implement the method according to any one of the foregoing aspects.

Any device, computer storage medium, computer program product, chip system, or communication system provided above is configured to perform a corresponding method provided above. Therefore, for beneficial effect that can be achieved by the device, the computer storage medium, the computer program product, the chip system, or the communication system, refer to beneficial effect of a corresponding solution in the corresponding method provided above. Details are not described herein again.

### BRIEF DESCRIPTION OF DRAWINGS

FIG. 1 is a diagram of a wireless communication system to which an embodiment of this application is applicable;
FIG. 2(a) to FIG. 2(c) are diagrams of several architectures to which an embodiment of this application is applicable;
FIG. 3 is another diagram of a scenario to which an embodiment of this application is applicable;
FIG. 4 is a diagram of a DRX cycle according to an embodiment of this application;
FIG. 5 is a diagram of a communication method 200 according to an embodiment of this application;
FIG. 6 is another diagram of a communication method 200 according to an embodiment of this application;
FIG. 7 is a diagram of a time relationship related to a first moment in a communication method according to an embodiment of this application;
FIG. 8 is another diagram of a communication method according to an embodiment of this application;
FIG. 9 is a diagram of a communication apparatus 2800 according to an embodiment of this application;
FIG. 10 is a block diagram of a communication apparatus according to an embodiment of this application; and
FIG. 11 is a block diagram of a communication system according to an embodiment of this application.

### DESCRIPTION OF EMBODIMENTS

The following describes technical solutions of embodiments in this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to an open access network (open RAN, O-RAN, or ORAN), and a cloud radio access network (cloud radio access network, CRAN). The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system. As an example, V2X may include vehicle-to-vehicle (vehicle-to-vehicle, V2V), vehicle-to-pedestrian (vehicle-to-pedestrian, V2P), and vehicle-to-infrastructure (vehicle-to-infrastructure, V2I). The infrastructure is, for example, a road side unit (road side unit, RSU) or a network device. The technical solutions provided in this application may be further applied to a communication system in which two or more systems are integrated.

The method provided in embodiments of this application is applicable to but are not limited to the following fields: MBMS, SC-PTM, multicast broadcast service, multicast broadcast single frequency network (Multicast Broadcast Single Frequency Network, MBSFN), dual-channel intelligent unicast (Dual-channel intelligent unicast, DC-IU), broadcast, multicast, multicast broadcast (Multicast Broadcast), groupcast, V2X, public safety (public safety), mission critical (mission critical), transparent IPv4/IPv6 multicast delivery (transparent IPv4/IPv6 multicast delivery), IPTV, software delivery over wireless (software delivery over wireless), group communications (group communications), internet of things (Internet of things, IoT), television video (TV Video), television (TV), linear television (linear TV), live (Live), broadcast service (radio services), device-to-device (device-to-device, D2D), unmanned driving (unmanned driving), autonomous driving (automated driving, ADS), assisted driving (driver assistance, ADAS), intelligent driving (intelligent driving), connected driving (connected driving), intelligent network driving (intelligent network driving), car sharing (car sharing), and the like.

A terminal device in embodiments of this application includes various devices having a wireless communication function, and the terminal device may be configured to be connected to a person, an object, a machine, and the like. The terminal device may be widely applied to various scenarios, for example, cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, smart grid, smart furniture, smart office, smart wearable, smart transportation, smart city, uncrewed aerial vehicle, robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device, namely, a mobile device, a subscriber unit (subscriber unit), a handheld device, a vehicle-mounted device, a wearable device, a cellular phone (cellular phone), a smart phone (smart phone), a SIP phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, a flight device (for example, an uncrewed aerial vehicle, a helicopter, a multi-helicopter, a four-helicopter, or an airplane), a ship, a remote control device, a smart home device, or an industrial device, may be an apparatus built in the foregoing device (for example, a communication module, a modem, or a chip in the foregoing device), or may be another processing device connected to the wireless modem. For ease of description, an example in which the terminal device is a terminal or a UE is used below for description.

It should be understood that, in some scenarios, the UE may be further used as a base station. For example, the UE may act as a scheduling entity that provides a sidelink signal between UEs in a V2X scenario, a D2D scenario, a P2P scenario, or the like.

In embodiments of this application, an apparatus configured to implement a function of the terminal device, namely, a terminal apparatus; or may be a terminal device; or may be an apparatus, for example, a chip system or a chip, that can support the terminal device in implementing the function. The apparatus may be installed in the terminal device. In embodiments of this application, the chip system may include a chip, or may include a chip and another discrete component.

The network device in embodiments of this application may be a device configured to communicate with the terminal device. The network device may also be referred to as an access network device, a radio access network device, or a core network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a multistandard radio (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that undertakes a base station function in D2D, V2X, and M2M communication, a network side device in a 6G network, a device that undertakes a base station function in a future communication system, a core network device, and the like. The base station may support networks using a same access technology or different access technologies. A specific technology and a specific device form that are used for the network device are not limited in embodiments of this application.

The base station may be fixed or mobile. For example, an aircraft may be configured as a mobile base station, and one or more cells may move based on a position of the mobile base station. In another example, the aircraft may be configured as a device that communicates with another base station.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiment of this application.

Optionally, a plurality of RAN nodes may coordinate to assist the terminal in implementing radio access, and different RAN nodes separately implement some functions of the base station. The network device in embodiments of this application may alternatively be a module or unit that completes some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

Optionally, the CU may decouple a user plane from a control plane, to form a CU-control plane (CU-Control Plane, CU-CP) and a CU-user plane (CU-User Plane, CU-UP). The CU-CP and the CU-UP support flexible deployment.

In different systems, the CU (or the CU-CP and the CU-UP), the DU, or the RU may also have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented through a software module, a hardware module, or a combination of the software module and the hardware module.

In embodiments of this application, the term "wireless communication" may also be briefly referred to as "communication", and the term "communication" may also be described as "data transmission", "information transmission", or "transmission".

It should be further understood that in this application, the "terminal device" is also referred to as a "terminal apparatus", a "terminal", or the like; the "network device" is also referred to as a "network apparatus", a "network side", or the like; and the "core network device" is also referred to as a "core network apparatus", a "core network", or the like. It should be understood that this application may be further applied to 6G. The network device may be a core network device that undertakes a base station function in a future communication system. In this application, the "network device" may also be referred to as a "core network device", a "core network apparatus", a "core network", or the like.

First, a network architecture to which this application is applicable is briefly described.

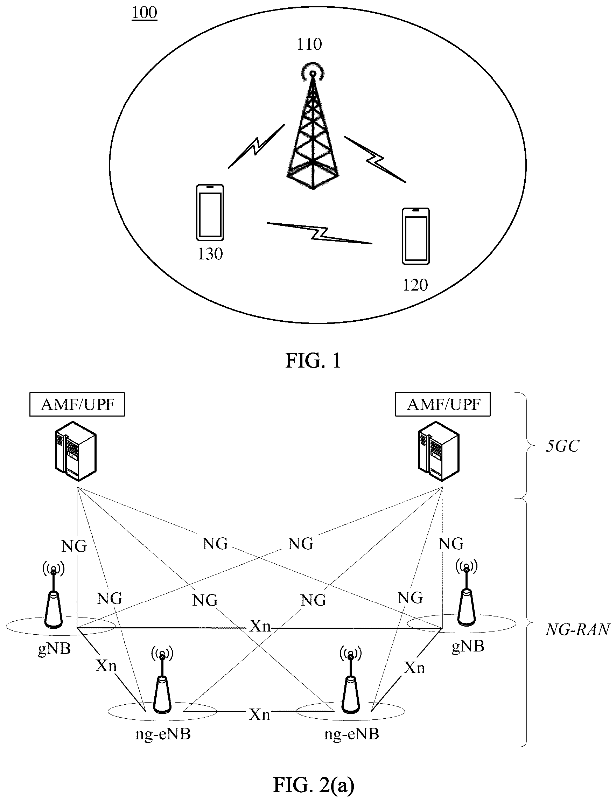

FIG. 1 is a diagram of a wireless communication system to which an embodiment of this application is applicable. As shown in FIG. 1, the wireless communication system 100 may include at least one network device, for example, a network device 110 shown in FIG. 1. The wireless communication system may further include at least one terminal device, for example, a terminal device 120 and a terminal device 130 shown in FIG. 1. A plurality of antennas may be configured for both the network device and the terminal device, and the network device and the terminal device may communicate with each other by using a multi-antenna technology. The terminal device 120 may directly communicate with the terminal device 130, or may communicate with the terminal device 130 through the network device 110.

When the network device communicates with the terminal device, the network device may manage one or more cells, and there may be one or more terminal devices in one cell. Optionally, the network device and the terminal device form a single-cell communication system without loss of generality, and the cell is referred to as a cell #1. The network device 110 in FIG. 1 may be a network device in the cell #1, or the network device 110 may serve a terminal device (for example, the terminal device 120) in the cell #1.

It should be noted that the cell may be understood as an area within coverage of a radio signal of the network device.

This application may be further used in a dual connectivity (dual connectivity, DC) scenario, including but not limited to: an evolved universal terrestrial radio access network (evolved universal terrestrial radio access network, EUTRAN)-NR dual connectivity (EUTRAN-NR dual connectivity, EN-DC) scenario and an NR-NR dual connectivity (NR-NR dual connectivity, NR-DC, or NR-NR-DC) scenario.

FIG. 2(a) to FIG. 2(c) are other diagrams of several architectures to which an embodiment of this application is applicable. As shown in FIG. 2(a), the scenario is an architectural diagram of a 5G system. As shown in FIG. 2(a), a RAN in 5G may be referred to as a next generation RAN (next generation RAN, NG-RAN). The NG-RAN includes two types: a gNB and a next generation eNB (next generation eNB, NG-eNB) evolved based on LTE. The two types of access network devices both may be connected to a 5G core network (5G core, 5GC). The 5GC includes a plurality of network elements, including but not limited to: an access and mobility management function (access and mobility management function, AMF) and a user plane function (user plane function, UPF). In addition, access network devices may communicate with each other through an Xn interface, and an access network device may communicate with a 5G core network through an NG interface. For details about a related architecture, refer to a protocol definition.

This application may be further used in a carrier aggregation (carrier aggregation, CA) scenario. In the CA scenario, a plurality of cell groups may serve a terminal device. In other words, a plurality of component carriers (component carriers, CC) may be aggregated together to improve a **technology** of a peak rate of the terminal and a system capacity, to meet an increasingly high network rate requirement of the terminal. CA has two important concepts: a primary component carrier in a primary cell (primary cell, PCell) and a secondary component carrier in a secondary cell (secondary cell, SCell). After a radio resource control (radio resource control, RRC) connection is established, the secondary cell may be configured to provide an additional radio resource for data transmission, to increase the system capacity.

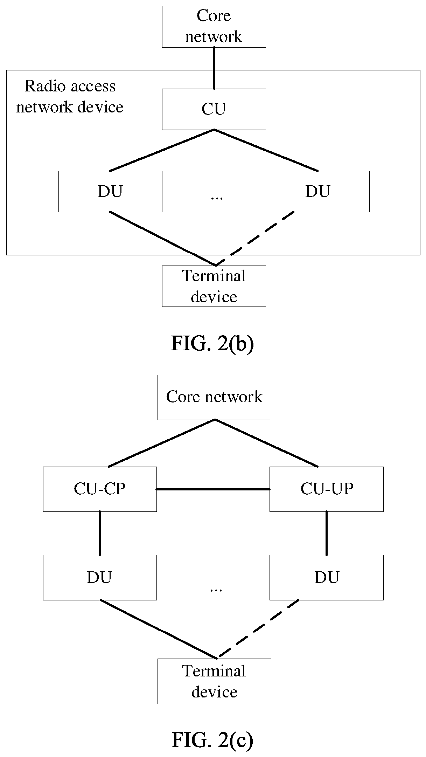

As shown in FIG. 2(b), the scenario is a scenario in which a CU and a DU are separately deployed. In the scenario, a network device includes the CU and the DU. The CU is configured to communicate with a core network, and the DU is configured to communicate with a terminal device.

As shown in FIG. 2(c), the scenario is a scenario in which a CU-CP, a CU-UP, and a DU are separately deployed. In the scenario, a network device includes the CU-CP, the CU-UP, and the DU. The CU-CP is configured to communicate with a control plane of a core network, the CU-UP is configured to communicate with a user plane of the core network, and the DU is configured to communicate with a terminal device.

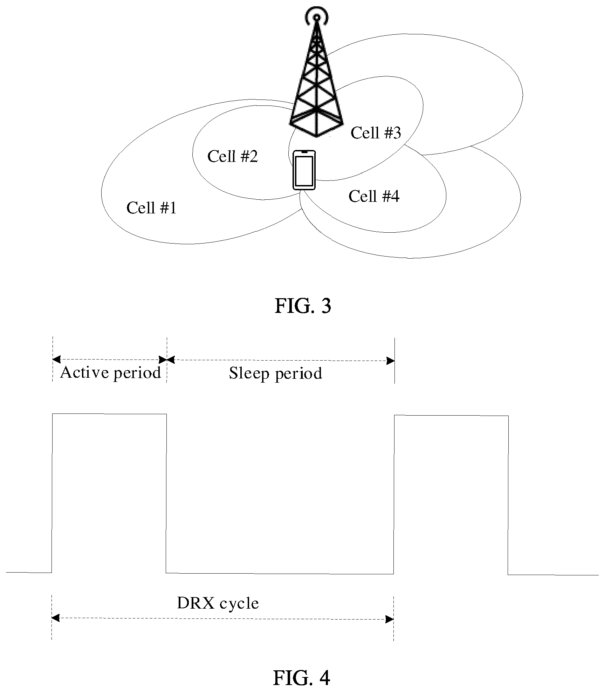

FIG. 3 is another diagram of a scenario to which an embodiment of this application is applicable. As shown in FIG. 3, a network device may manage a plurality of cells. A cell #1 is a primary cell of a terminal device, a cell #2, a cell #3, and a cell #4 are secondary cells of the terminal device, and CCs of the cell #1, the cell #2, the cell #3, and the cell #4 may jointly provide a service for the terminal device by using a CA technology.

For ease of understanding, related concepts in this application are described.

### 1. State of a terminal device

The terminal device in NR has three RRC states: an RRC idle (idle) state (state), an RRC inactive (inactive) state, and an RRC connected (connected) state. In the RRC connected state (a connected state for short), an RRC connection is established between the terminal device and a network device. When no data is transmitted, the network device may release the terminal device to the RRC idle state (an idle state for short). Alternatively, the network device may release the terminal device to the RRC inactive state (an inactive state for short), and the RRC connection is suspended (suspend). In the idle state, no RRC connection is established between the network device and the terminal device. In the inactive state, the network device still maintains context information of the terminal device. An advantage of introducing the inactive state is that compared with the idle state, because the network device still retains a context of the terminal device in the inactive state, the RRC connection can be restored more quickly. When a service arrives, a delay can be reduced. For ease of description, an RRC non-connected state (a non-connected state for short) is used below to represent the inactive state and the idle state. To be specific, a terminal device in the non-connected state may be a terminal device in the RRC inactive state, or may be a terminal device in the RRC idle state. This application may be applied to another state in the non-connected state.

### 2. Multicast and broadcast service (multicast and broadcast service, MBS)

The MBS may simultaneously provide data for a large quantity of users with a same requirement through a small quantity of resources, so that network resources can be shared. The MBS includes a multicast service and a broadcast service. The broadcast service is a communication service that a network device simultaneously provides same specific content data for all terminal devices in a specific geographical area. The multicast service is a communication service provided by the network device for a group of terminals that join a multicast session (multicast session). The multicast service may be delivered to the terminal device through the multicast session, and the terminal device that receives multicast can receive the multicast service only after an authentication procedure is performed between the terminal device and a core network, and the authentication procedure may also be understood as a process in which the terminal device joins the multicast session. Therefore, receiving the multicast service may also be referred to as receiving the multicast session or an MBS session (MBS session), and the MBS session may be identified by using a temporary mobile group identifier (Temporary mobile group identifier, TMGI). The multicast service may also be referred to as a groupcast service. In this application, "multicast" and "groupcast" may be replaced with each other. This is not limited.

Multicast and broadcast service control channel and multicast and broadcast service traffic channel:
Two logical channels are introduced in a broadcast technology of an NR MBS: a multicast and broadcast service control channel (MBS control channel, MCCH) and a multicast and broadcast service traffic channel (MBS traffic channel, MTCH). The MCCH may be configured to transmit control information, including configuration information of the MTCH, for example, a group radio network temporary identifier (group radio network temporary identifier, G-RNTI) corresponding to the MTCH and a discontinuous reception (discontinuous reception, DRX) parameter. The MCCH is sent periodically. The MTCH logical channel is configured to carry user data of a broadcast service. The MTCH is scheduled through the MCCH. The MTCH is configured at a level of per (per) G-RNTI, namely, per MBS service. A base station simultaneously schedules service data to a plurality of UEs by using the G-RNTI, and each G-RNTI may be associated with at least one broadcast service.

It should be understood that, in different communication systems, the foregoing channels may correspond to different names. For example, in a 4th generation (4th generation, 4G) communication system, a multicast and broadcast service control channel may be a single-cell multicast and broadcast service control channel (single-cell MCCH, SC-MCCH). For another example, in a 5G communication system, the multicast and broadcast service control channel may be an MC-MCCH. In a future technology development process, a channel having a function similar to that of the multicast and broadcast service control channel may also have another name, or in different communication environments, communication scenarios, or communication technologies, channels having a same function may also have different names. However, channel content and functions are not limited by different names of channels that have a similar or same function in different systems. In this application, the multicast and broadcast service control channel may be configured to transmit control information, and the multicast and broadcast service traffic channel may be configured to transmit user data.

Unless otherwise specified, in this application, the MCCH is for representing the multicast and broadcast service control channel, and the MTCH is for representing the multicast and broadcast service traffic channel. It should be further understood that other English acronyms in this application are similar to this. Details are not described again. It may be understood that the MCCH and/or the MTCH may also be applied to a multicast technology.

DCI may be carried on a downlink control channel. In this application, a representation of the DCI may be replaced with a PDCCH, and a representation of the PDCCH may be replaced with the DCI. In this application, the RNTI scrambling the PDCCH/DCI/control information may be understood as: the RNTI scrambling cyclic redundancy check (cyclic redundancy check, CRC) of the PDCCH/DCI/control information, or CRC, of the PDCCH/DCI/control information, scrambled by the RNTI (the PDCCH/DCI/control information with CRC scrambled by the RNTI).

### MBS transmission manner:

For transmission of the MBS service/data, a point-to-point (Point-to-Point, PTP) transmission manner and/or a point-to-multipoint (Point-to-Multipoint, PTM) transmission manner are/is included.

PTP transmission manner: In this transmission manner, a transmit end sends one piece of data to one receive end.

The PTP transmission manner may be understood as follows: (The network device) schedules, (for the terminal device) through a physical downlink control channel (Physical Downlink Control Channel, PDCCH)/downlink control information (Downlink control information, DCI) scrambled by a UE-specific radio network temporary identifier (Radio Network Temporary Identifier, RNTI) (for example, a cell-radio network temporary identifier (Cell-RNTI, C-RNTI), or a first RNTI), a physical downlink shared channel (Physical downlink shared channel, PDSCH) scrambled by the UE-specific RNTI (for example, the C-RNTI, or the first RNTI).

PTM transmission manner: In the PTM transmission manner, the transmit end may send one piece of data to a plurality of receive ends.

The PTM transmission manner may be understood as follows: (The network device) schedules, (for the terminal device) through a PDCCH/DCI scrambled by a common RNTI (for example, a Group-RNTI (G-RNTI), or a second RNTI), a PDSCH scrambled by the common RNTI (for example, the G-RNTI, or the second RNTI). Alternatively, it may be understood that the network side scrambles one piece of DCI by using one common RNTI, and the DCI is used to schedule one piece of data scrambled by the common RNTI. In this case, a plurality of communication apparatuses receive a same piece of DCI, and the plurality of communication apparatuses receive same data.

Hybrid automatic repeat request (Hybrid Automatic Repeat reQuest, HARQ):
NR MBS multicast supports HARQ feedback of a terminal device in a connected state, and does not support HARQ feedback of a terminal device in a non-connected state.

For initially transmitted data transmitted in the PTM manner, there may be two retransmission manners:
A first manner is retransmission scheduled in a manner of scrambling by using a C-RNTI. In this transmission manner, the transmit end sends one piece of retransmitted data to one receive end.
A second manner is retransmission scheduled in a manner of scrambling by using a G-RNTI. In this transmission manner, the transmit end may send one piece of retransmitted data to a plurality of receive ends.

It may be understood that retransmission in this application may be retransmission at a media access control (Media Access Control, MAC) layer or HARQ retransmission. The retransmission in embodiments of this application may be retransmission scheduled in a G-RNTI manner. The retransmission in this manner may also be referred to as PTM retransmission, G-RNTI-scheduled retransmission, or the like. This is not limited in this application.

### 3. Discontinuous reception (discontinuous reception, DRX)

DRX is used to control the terminal device to monitor a PDCCH, so that power consumption of the terminal device can be reduced on a premise that data can be effectively transmitted. When DRX is configured for the terminal device, the terminal device sometimes may be enabled to enter a sleep period. In this case, the terminal device is in a "sleep state", and the terminal device does not need to continuously monitor the PDCCH. When the terminal device needs to monitor the PDCCH, the terminal device is woken up from the "sleep state" to enter an "active state", that is, enters an active period. In this way, the terminal device can save power. For a typical DRX cycle, refer to FIG. 4. One DRX cycle (cycle) includes onDuration (which equivalent to an active period), time controlled by a timer, and an opportunity for DRX (a sleep period).

onDuration: is duration in which the terminal device waits to receive a PDCCH after the terminal device is woken up. If the terminal device successfully decodes the PDCCH, the terminal device keeps in a state state of being woken up, and prolongs wake-up time by controlling a timer (for example, an inactivity-timer, a retransmission timer, or a HARQ-RTT timer).

Opportunity for DRX: The time period is sleep time in DRX, namely, time in which the terminal device enters the sleep period and does not monitor the PDCCH to save power. Longer sleep time in DRX indicates lower power consumption of the terminal device.

DRX cycle: may be understood as a repetition cycle of onDuration. One DRX cycle consists of onDuration, a part of duration of time that controlled by a timer that may occur subsequently, and the opportunity for DRX.

In existing multicast DRX, a timer used to control the terminal device to be in the active state may include drx-onDurationTimerPTM, drx-InactivityTimerPTM, and drx-RetransmissionTimerDL-PTM.

Retransmission-related timers include the following two types: drx-RetransmissionTimerDL-PTM, which is configured for each downlink HARQ process, and may be understood as maximum duration for which the terminal device receives expected downlink PTM retransmitted data in a retransmission scenario, namely, maximum duration for which the terminal device needs to monitor a PDCCH; and drx-HARQ-RTT-TimerDL-PTM, which is also configured for each downlink HARQ process, and may be understood as minimum duration for which the terminal device needs to wait before receiving expected downlink PTM retransmitted data.

Duration indicating that the communication apparatus waits before receiving the retransmitted data may include/be understood as any one or more of the following: duration indicating that the communication apparatus waits before getting/receiving the retransmitted data (for example, the minimum duration), and duration indicating that the communication apparatus expects to wait before getting/receiving the retransmitted data (for example, the minimum duration).

The duration indicating that the communication apparatus receives the retransmitted data may include/be understood as duration (for example, the maximum duration) indicating that the communication apparatus gets/receives the retransmitted data.

A procedure in which the terminal device in the connected state receives PTM retransmission in a DRX mechanism may be as follows:
(1) The terminal device monitors the PDCCH in the active period. If the PDCCH indicates that there is downlink transmission, the terminal device determines whether a HARQ feedback is enabled.
(2) If the terminal device determines that the HARQ feedback is enabled, the terminal device may start a drx-HARQ-RTT-TimerDL-PTM timer after sending the HARQ feedback for the downlink transmission to the network device, for example, in a 1^{st} symbol after sending the feedback.
(3) If the drx-HARQ-RTT-TimerDL-PTM timer expires, the terminal device determines whether the received downlink transmission is successfully decoded.
(4) If the terminal device determines that the received downlink transmission fails to be decoded, the terminal device may start a drx-RetransmissionTimerDL-PTM timer, and the terminal device monitors the PDCCH in a running period of the drx-RetransmissionTimerDL-PTM timer.

For ease of description, the drx-HARQ-RTT-TimerDL-PTM timer or a timer with a similar function is a HARQ-RTT timer or an RTT timer for short, and the drx-RetransmissionTimerDL-PTM timer or a timer with a similar function is a retransmission timer for short below.

In NR Rel-17, the terminal device receives a multicast session in the connected state. For the terminal device, in the connected state, that joins the multicast session, the network device sends an MBS multicast configuration, for example, a multicast MRB configuration, a multicast common frequency resource (common frequency resource, CFR) configuration, a physical layer configuration (which may also be referred to as a layer 1/L1 configuration), and a multicast G-RNTI, to the terminal device by using dedicated signaling such as an RRC reconfiguration message (RRC Reconfiguration message). The network device may switch the terminal device to an RRC idle state or an RRC inactive state. A specific switching condition may be that when (temporarily) no data used for the multicast session needs to be sent to the terminal device, or the like.

When a quantity of users receiving the multicast session in a cell is excessively large, the following case may occur: The quantity of users receiving the multicast session exceeds a quantity of users, in the connected state, that can be accommodated in the cell, which causes network congestion. To alleviate network congestion, in Rel-18, the terminal device is supported to receive multicast in an RRC inactive state. For example, when the terminal device has no unicast service and has only a multicast service, a network may release the terminal device to the RRC inactive state to receive multicast. In this way, a quantity of terminal devices in an RRC connected state in the network can be reduced. This not only helps alleviate network congestion, but also helps save energy of the terminal device.

However, how to ensure, as much as possible, quality of receiving the downlink multicast transmission by the terminal device in the inactive state is an urgent problem to be resolved.

Based on the foregoing analysis, this application provides a communication method and apparatus, so that a terminal device can receive, in a non-connected state, retransmission of downlink multicast transmission triggered by a terminal device in a connected state, thereby helping improve quality of receiving the downlink multicast transmission by the terminal device in the non-connected state, and improving receiving quality of a multicast service.

It may be understood that the term "and/or" in this specification describes only an association relationship for describing associated objects and indicates that three relationships may exist. For example, A and/or B may indicate the following three cases: Only A exists, both A and B exist, and only B exists. In addition, the character "/" in this specification usually indicates an "or" relationship between the associated objects.

It may be further understood that, in this application, an "indication" may include a direct indication, an indirect indication, an explicit indication, or an implicit indication. When a piece of indication information is described as indicating A, it may be understood as that the indication information carries A, directly indicates A, or indirectly indicates A.

In addition, "correspondence" and "association" in this application mean that there is a correspondence or a mapping relationship between two objects. The correspondence may also be one-to-one, one-to-many, or many-to-one.

In this application, information indicated by the indication information is also referred to as to-be-indicated information. In a specific implementation process, the to-be-indicated information is indicated in a plurality of manners, for example, but not limited to, the following manners: The to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, protocol-stipulated), to reduce indication overheads to some extent.

To ensure as much as possible that quality of receiving the multicast service by the terminal device in the non-connected state is the same as quality of receiving the multicast service by the terminal device in the connected state, it is meaningful to enable the terminal device in the non-connected state to receive the retransmission of the downlink multicast transmission triggered by the terminal device in the connected state. In PTM initial transmission, one piece of data is sent. In PTM retransmission, one piece of data is also sent. One piece of data sent in a PTM manner may be simultaneously received by a plurality of terminal devices. A part of these terminals may be terminal devices in a connected state, and a part of these terminals are terminal devices not in a connected state, for example, in an idle state or an inactive state. If the network sends a data packet, and then chooses, based on a HARQ feedback of the terminal device in the connected state, to send retransmission in a PTM manner, it indicates that many terminal devices in the connected state unsuccessfully decode the data packet. In this case, the terminal device in the non-connected state may also unsuccessfully decode the data packet. Therefore, it is meaningful that the terminal device in the non-connected state and the terminal device in the connected state simultaneously receive the retransmitted data packet sent in the PTM manner. For the terminal device in the non-connected state, this can improve a decoding success rate of receiving the data packet, thereby improving receiving quality of the downlink multicast transmission, and improving receiving quality of the multicast service. It should be understood that this application is also applicable to a scenario other than the foregoing scenario.

If the terminal in the non-connected state does not have a related mechanism for receiving the retransmission, the terminal does not enable receiving of the retransmission, or does not start a DRX timer related to the retransmission, thereby reducing an opportunity for receiving the retransmission, and affecting receiving quality of an MBS.

In addition, as described above, if the terminal device in the connected state determines that the HARQ feedback is enabled, the terminal device may start the HARQ-RTT timer in a 1 ^{st} symbol after the terminal device sends the HARQ feedback to the network device. Because the terminal device in the non-connected state does not have an uplink resource used to send the HARQ feedback or is limited by a network configuration, the terminal device cannot determine whether the network sends the PTM retransmission, and consequently cannot determine whether to enable receiving of the retransmission. For example, if the terminal device does not enable the HARQ feedback after receiving the downlink multicast transmission, the retransmission timer that may receive the retransmission is not further triggered subsequently. Consequently, the terminal device in the non-connected state cannot determine a PTM retransmission occasion, resulting in missing receiving of the retransmission, and affecting the receiving quality of the multicast service. Therefore, how the terminal device in the non-connected state determines whether the network sends the PTM retransmission is a problem that needs to be further resolved.

The terminal device in the non-connected state may learn of, from DCI for scheduling the PTM initial transmission, HARQ-related information of the terminal device in the connected state, and the information includes whether the HARQ feedback is enabled and related information of a HARQ feedback moment. In this application, the information about the moment may be a symbol-level time position, or may be another time level. Specifically, the network provides the multicast service by scheduling the PTM transmission by using DCI 4-1 or DCI 4-2 scrambled by a G-RNTI, and the terminal device correspondingly monitors the DCI 4-1 or the DCI 4-2 by using the G-RNTI. In addition to PDSCH scheduling information, the DCI 4-1 and the DCI 4-2 further include:
(1) resource configuration information of a PUCCH, where the information is used to determine a symbol corresponding to the PUCCH, and is mainly used to determine a symbol-level time position at which an uplink HARQ feedback is transmitted;
(2) timing indication information between the PDSCH and the HARQ feedback, where the information is used to determine a specific time difference from receiving the PDSCH to sending the HARQ feedback, and a unit is slot; and
(3) the DCI 4-2 further includes indication information indicating whether the HARQ feedback indicated by the DCI is enabled; and specifically, the DCI 4-2 includes 1-bit indication information, where if the indication information is 1, it indicates that the HARQ feedback is enabled; or if the indication information is 0, it indicates that the HARQ feedback is disabled.

However, for the terminal device in the non-connected state, the indication information in the DCI is inaccurate. Specific problems are as follows:

### Problem 1:

If the DCI 4-2 is used, even if the terminal device in the non-connected state receives the DCI that is the same as the DCI received by the terminal in the connected state, it cannot be determined whether the terminal in the connected state enables the HARQ feedback, and consequently it cannot be determined whether the network sends the PTM retransmission. A reason is that in some cases, the indication information indicating whether the HARQ feedback is enabled in the DCI 4-2 is inaccurate.

Specifically, for the terminal in the connected state, the network may indicate, by using RRC dedicated signaling and/or a field (or referred to as a field) in the DCI, whether the HARQ feedback is enabled. Specifically, the RRC configuration sent by the network to the terminal may include a harq-FeedbackEnablerMulticast-r17 parameter, and possible values of the parameter include enabled and DCI-enabler. The indication manners are as follows:
(1) If the RRC configuration sent by the network does not include the parameter, it means that the network indicates that the HARQ feedback is not enabled.
(2) If the RRC configuration sent by the network includes the parameter and the value of the parameter is enabled, it means that the network indicates that the HARQ feedback is enabled.
(3) If the RRC configuration sent by the network includes the parameter and the value of the parameter is DCI-enabler, it means that the DCI indicates whether to enable the HARQ feedback. In this case, the terminal determines, based on the indication information included in the DCI 4-2, whether to enable the HARQ feedback, and the DCI 4-1 cannot complete this indication manner. Therefore, it may be understood that, in this indication manner, the DCI indication information needs to be combined with RRC configuration information. When the DCI-enabler is configured in RRC signaling, the indication information in the DCI 4-2 is accurate. Otherwise, the indication information in the DCI 4-2 may be incorrect.

For the terminal in the non-connected state, because an RRC connection is suspended or no RRC connection is established, the terminal cannot receive the RRC configuration. Consequently, the terminal cannot learn, by using the DCI 4-1, whether the HARQ feedback is enabled, and information, about whether the HARQ feedback is enabled, that is learned of by using the DCI 4-2 may be incorrect. For example, if RRC configurations received by all terminals in the connected state are enabled, it indicates that the HARQ is enabled; or if the RRC configurations in the DCI indicate 0, it indicates that the HARQ is disabled. The terminal in the non-connected state cannot accurately determine, by using the DCI, whether the network enables the HARQ feedback, and consequently cannot determine whether the retransmission-related timer needs to be started, affecting receiving of retransmitted data. It should be noted that the determining step before the retransmission-related timer is started is meaningful. If the determining step is not performed, the terminal needs to start the retransmission-related timer each time after receiving the data, and consequently time in which the terminal is in the active state is prolonged and energy consumption is increased; or the terminal does not start the retransmission-related timer each time after receiving the data, and consequently it cannot be ensured that the terminal can normally receive the retransmitted data, and receiving quality of the multicast service of the terminal is reduced.

Preferably, in this embodiment of this application, Problem 2 may be further resolved:

In some scenarios, the terminal in the non-connected state does not perform HARQ feedback, and consequently the terminal in the non-connected state cannot determine a moment at which PTM retransmitted data starts to be received. A specific position at which the terminal in the connected state sends the HARQ feedback is uncertain. Even if the terminal in the non-connected state learns of related information of the HARQ feedback moment by using the DCI for scheduling the multicast transmission, the terminal in the connected state may not send the HARQ feedback based on the HARQ feedback moment indicated in the DCI. There may be an offset between a position at which the HARQ feedback is actually sent and the feedback moment indicated in the DCI, or the HARQ feedback may not be sent. There are at least two following possible factors:
(1) A physical uplink control channel (physical uplink control channel, PUCCH) resource used by the terminal in the connected state to send the HARQ feedback may be multiplexed with a PUCCH resource of another terminal, or may be channel-associated with another physical uplink shared channel (physical uplink shared channel, PUSCH) resource. In this way, another terminal in a connected state is incapable of learning of the position at which the HARQ feedback is sent, and the terminal in the non-connected state is even more incapable of learning of the position. Consequently, positions at which different terminals in a connected state send HARQ feedbacks are inconsistent with the position indicated in the DCI. HARQ-RTT timers and/or retransmission timers started by different terminal devices are all determined based on time after the terminal devices sends the HARQ feedbacks, and the time may be inconsistent time.
(2) A PUCCH for sending the HARQ feedback by the terminal in the connected state may be dropped (drop). In this case, the terminal actually does not send the HARQ feedback.

Starting the HARQ-RTT timer and/or the retransmission timer at an inaccurate moment may cause the terminal to miss receiving of the retransmitted data. Different terminals in a connected state may send HARQ feedbacks at different moments. After sending the HARQ feedbacks, the terminals start HARQ-RTT timers at respective moments and wait for retransmission timers to be started subsequently. When the network sends the retransmission is not limited in this application. In a most possible implementation, the network determines, based on positions at which different terminals send HARQ feedbacks, start moments of retransmission timers of the different terminals, and sends the retransmitted data in a common time period of the retransmission timers of the different terminals. In this way, it can be ensured that all terminals can receive the retransmission to the greatest extent. Therefore, if the terminal in the non-connected state starts the HARQ-RTT timer or the retransmission timer at an inaccurate moment, or a time difference between time in which the terminal in the non-connected state starts the retransmission-related timer and time in which the terminal in the connected state starts the retransmission-related timer is excessively large, the terminal in the non-connected state misses sending time of the retransmitted data, thereby affecting receiving of the retransmitted data, and further affecting receiving quality of the multicast service of the terminal in the non-connected state.

The following describes in detail a method provided in embodiments of this application with reference to the accompanying drawings. Embodiments of this application may be applied to at least the network architecture shown in FIG. 1, FIG. 2(a) to FIG. 2(c), or FIG. 3. This is not limited herein.

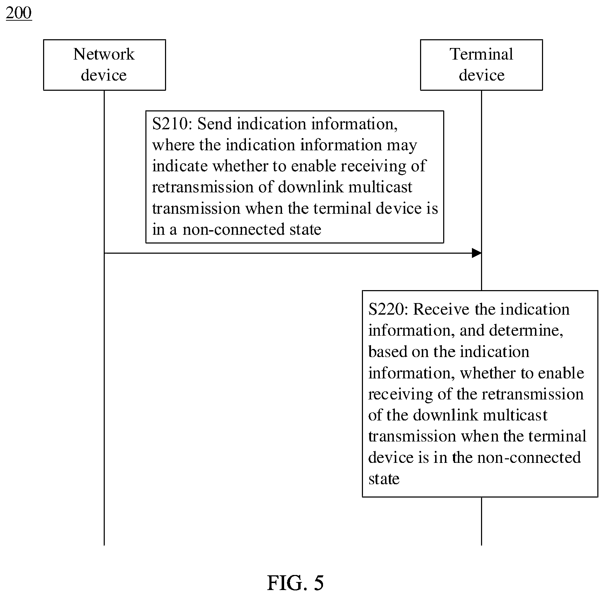

FIG. 5 is a diagram of a communication method 200 according to an embodiment of this application. The method 200 may include the following steps.

S210: A network device sends indication information, where the indication information may indicate whether a terminal device enables receiving of retransmission of downlink multicast transmission when the terminal device is in an inactive state or an idle state.

S220: The terminal device receives the indication information; and the terminal device determines, based on the indication information, whether to enable receiving of the retransmission of the downlink multicast transmission when the terminal device is in the inactive state or the idle state.

It may be understood or alternatively, indicating whether to enable receiving of the retransmission of the downlink multicast transmission may mean that the network device indicates, by using the indication information, whether a network enables a PTM retransmission mechanism for a multicast service, or indicates whether the network may schedule transmission of retransmitted data, or indicates whether the network sends retransmitted data. In an implementation, the indication information sent by the network device may provide information about the foregoing indicated content for a terminal in a non-connected state. It may be understood that, when the network device indicates, by using the indication information, to enable the PTM retransmission mechanism, it does not mean that the network device definitely schedules the transmission of the retransmitted data. For example, if the network device enables the PTM retransmission mechanism, and all terminals in a connected state feed back that decoding is correct, the network device may not schedule transmission of the retransmission. It may be understood that the foregoing indicated content may be information indicated by the network for the connected state, or may be information indicated by the network for the non-connected state, or may be information indicated by the network for both the connected state and the non-connected state. In another implementation, the indication information sent by the network device is information, about the foregoing indicated content, that is provided for the terminal device when the terminal device is in the non-connected state.

The terminal device may determine, based on the indication information, the content indicated by the network device by using the indication information. The terminal device may determine, based on the indication information, whether to enable receiving of the retransmission of the downlink multicast transmission when the terminal device is in the inactive state or the idle state. It may be understood or alternatively, that the terminal device determines, based on the indication information, whether to enable receiving of the retransmission of the downlink multicast transmission may be that the terminal device determines, based on the indication information, whether to expect to receive the retransmission of the downlink multicast transmission, or whether to start a related timer for the retransmission of the downlink multicast transmission. It may be understood that, that the terminal device determines to enable receiving of the retransmission of the downlink multicast transmission does not mean that the terminal device definitely receives the retransmission of the downlink multicast transmission. For example, the network device indicates to enable the PTM retransmission mechanism, and the terminal device determines to enable receiving of the retransmission of the downlink multicast transmission accordingly. However, the network device does not schedule transmission of the retransmission. As a result, the terminal device does not receive the retransmitted data. It may be understood that, the foregoing content may be replaced with the indication information, and may indicate whether the terminal device enables receiving of the retransmission of the downlink multicast transmission when the terminal device is in the inactive state or the idle state, or determine, based on the indication information, whether to enable receiving of the retransmission of the downlink multicast transmission when the terminal device is in the inactive state or the idle state. For ease of description, the content indicated by using the indication information is briefly described as whether to enable receiving of the retransmission below. It may be understood that the terminal in the non-connected state does not perform HARQ feedback.

The following uses an example to describe a manner in which the indication information indicates the foregoing indicated content.

Manner 1: The indication information is configuration information of a timer, and the timer is used to receive the retransmission of the downlink multicast transmission when the terminal device is in the inactive state or the idle state; and the terminal device determines, based on the configuration information of the timer, whether to enable receiving of the retransmission of the downlink multicast transmission.

Optionally, the indication information is carried in radio resource control RRC signaling (for example, an RRC reconfiguration message or an RRC release message), or is carried on a multicast and broadcast service control channel MCCH.

In Manner 1, whether the timer is configured is related to whether receiving of the retransmission is enabled. For example, it may be that the timer is configured to indicate that receiving of the retransmission is enabled, and no timer is configured to indicate that receiving of the retransmission is disabled. It should be understood that, the network may further configure another parameter to indicate whether to enable receiving of the retransmission. An advantage of this is that no additional indication parameter is required to indicate whether to enable receiving of the retransmission, so that signaling resource overheads can be reduced.

Optionally, the configuration information of the timer includes configuration information of at least one timer. Optionally, the configuration information of the timer includes configuration information of a first timer, and the first timer is used to receive the retransmission of the downlink multicast transmission when the terminal device is in the inactive state or the idle state. Optionally, the configuration information of the timer includes configuration information of a second timer, and the second timer is used to not to perform PDCCH detection when the terminal device is in the inactive state or the idle state. A specific configuration manner of the timer is not limited in this application. It may be understood that the first timer and/or the second timer may be used in a DRX process in an RRC inactive state or idle state, or may be used in retransmission in an RRC inactive state or idle state, or may be used in a retransmission-related DRX process in an RRC inactive state or idle state.

It may be understood that a function of the first timer is similar to that of a retransmission timer, and a function of the second timer is similar to that of a HARQ-RTT timer. It may be understood that, for receiving of the retransmission of the downlink multicast transmission when the terminal device is in the inactive state or the idle state, only the first timer may be configured. It may be understood that the first timer and/or the second timer may be referred to as the HARQ-RTT timer and/or the retransmission timer, or PTM may be added as a suffix, or an RRC state may be added as a suffix, or there may be another name. This is not limited in this application.

Optionally, the first timer may reuse an existing retransmission timer (drx-RetransmissionTimerDL-PTM) configured for the terminal in the connected state, and the second timer may reuse an existing RTT timer (drx-HARQ-RTT-TimerDL-PTM) configured for the terminal in the connected state. An advantage is that reusing configuration information of the existing timer can reduce signaling.

Manner 2: The indication information directly indicates whether to enable receiving of the retransmission, or the indication information directly indicates to enable receiving of the retransmission, or the indication information directly indicates to disable receiving of retransmission.

Optionally, the indication information is carried in radio resource control RRC signaling (for example, an RRC reconfiguration message or an RRC release message), or is carried on a multicast and broadcast service control channel MCCH.

For example, the indication information may be indicated by using 1 bit, where for example, a value being 1 indicates that receiving of the retransmission is enabled, and/or a value being 0 indicates that receiving of the retransmission is disabled; or an enumerated value represented as true may be used for indication, where for example, a value being true indicates that receiving of retransmission is enabled; or a default value of a specific field or parameter may indicate the information, where for example, if a specific predefined parameter is not sent at a predefined position, it indicates that receiving of the retransmission is disabled; or there may be another possible indication manner. This is not limited in this application.

It may be understood that the indication information may have another name, for example, whether multicast retransmission is enabled, or whether retransmission in an inactive state is enabled. This is not limited in this application.

It may be understood that the indication information may be other information related to the retransmission, and an association relationship between the other information and whether to enable receiving of the retransmission indicates whether to enable receiving of the retransmission. For example, whether a retransmission-related timer is started, whether a HARQ is enabled, HARQ feedback enabling information, or the like may be that if the timer is started, it indicates that receiving of the retransmission is enabled; if the HARQ is enabled, it indicates that receiving of the retransmission is enabled; or the like. It should be noted that the HARQ enabled herein does not mean that the terminal in the non-connected state performs HARQ feedback on data transmitted for multicast data, but indicates whether to enable receiving of the retransmission; or the HARQ enabled herein means that the terminal in the connected state performs HARQ feedback on the data transmitted for the multicast data.

Optionally, the indication information is the HARQ feedback enabling information. Optionally, the indication information is a harq-FeedbackEnablerMulticast-r17 parameter. When the HARQ feedback enabling information or the harq-FeedbackEnablerMulticast-r17 parameter indicates a first state, the indication information indicates to enable receiving of the retransmission. Optionally, when the HARQ feedback enabling information or the harq-FeedbackEnablerMulticast-r17 parameter indicates a second state, the indication information indicates to disable receiving of the retransmission. It may be understood that the first state or the second state may be a value being 1 or 0, or may be an enumerated value represented as true, enable, or the like. This is not limited in this application. An advantage of the indication information being the harq-FeedbackEnablerMulticast-r17 parameter is that existing signaling is reused, and no new signaling needs to be defined, thereby saving signaling resources. When the terminal is in the connected state, the network may indicate whether the terminal enables receiving of the retransmission in the non-connected state, thereby reducing complexity of running the terminal, and reducing power consumption of the terminal. In addition, for indicating whether to enable receiving of the retransmission, the network may actively indicate, in the connected state, indication results different from those of other terminal devices to some terminal devices, so that different requirements of different terminal devices on receiving quality of the MBS can be matched. An advantage of this is that network configuration flexibility is increased.

Manner 3: The indication information directly indicates whether to enable receiving of the retransmission, or the indication information is carried in downlink scheduling information DCI.

Optionally, the DCI is used to schedule the downlink multicast transmission.

Optionally, the indication information may be one field in the DCI. It may be understood that the indication information may perform indication by using one bit, where for example, a value being 1 indicates that receiving of the retransmission is enabled, and/or a value being 0 indicates that receiving of the retransmission is disabled; or may indicate to enable and/or disable receiving of the retransmission by using a reserved bit in the DCI. Alternatively, the indication information may perform indication in a manner of jointly indicating by using other information and information about whether to enable receiving of the retransmission, or in another indication manner. This is not limited in this application.

Optionally, the indication information may be indication information indicating whether HARQ feedback indicated by DCI included in DCI 4-2 is enabled. As described above, the indication information is indicated by using 1 bit.

Manner 4: The terminal device receives configuration information, where the configuration information indicates that the indication information in DCI is valid, or the configuration information indicates that DCI includes the indication information.

In Manner 4, when the configuration information indicates that the indication information in the DCI is valid, or when the configuration information indicates that the DCI includes the indication information, the network indicates, by using the indication information in the DCI, whether to enable receiving of the retransmission. For the indication information in the DCI, refer to Manner 3. An advantage of this is that an indication level or an indication frequency can be flexibly adjusted, so that the indication can be more frequently performed by using the DCI as required, and relatively low frequency indication can be performed through an MCCH, RRC signaling, or the like in another case.

Optionally, the configuration information is carried in radio resource control RRC signaling (for example, an RRC reconfiguration message or an RRC release message), or is carried on a multicast and broadcast service control channel MCCH. For a possible indication manner of the configuration information, refer to Manner 1 or Manner 2 above. Details are not described herein again. It should be noted that the configuration information and the indication information may be different values of a same parameter. For example, the indication information indicates to enable receiving of the retransmission may be that a value of a specific predefined parameter is true, and the configuration information indicates that the indication information in the DCI is valid may be that the value of the parameter is an enumerated value represented as DCI-enabler.

Optionally, the configuration information is HARQ feedback enabling information. Optionally, the configuration information is a harq-FeedbackEnablerMulticast-r17 parameter. When the HARQ feedback enabling information or the harq-FeedbackEnablerMulticast-r17 parameter indicates a first state, the configuration information indicates that the indication information in the DCI is valid, or the configuration information indicates that the DCI includes the indication information. Optionally, when the HARQ feedback enabling information or the harq-FeedbackEnablerMulticast-r17 parameter indicates a second state, the configuration information indicates that the indication information in the DCI is invalid or the configuration information indicates that the DCI does not include the indication information. It may be understood that the first state or the second state may be a value being 1 or 0, or may be an enumerated value represented as true, enable, or dci-enabler. This is not limited in this application. An advantage of the indication information being the harq-FeedbackEnablerMulticast-r17 parameter is that existing signaling is reused, and no new signaling needs to be defined, thereby saving signaling resources.

In a possible case in which Manner 4 is used, the configuration information indicates that the indication information in the DCI is valid; or the configuration information indicates that the DCI includes the indication information, but the DCI does not include the indication information. For example, the configuration information indicates that the indication information in the DCI is valid; or the configuration information indicates that the DCI includes the indication information, but the network schedules the multicast transmission by using a DCI 4-1 format, and the DCI 4-1 format does not include an indication field indicating whether the HARQ feedback is enabled. In this case, whether to enable receiving of the retransmission may be indicated in either of Manner 1 and Manner 2 above; or in this case, it is indicated by default that receiving of the retransmission is enabled, or in this case, it is indicated by default that receiving of the retransmission is disabled.

It may be understood that the foregoing indication manner may be further combined with a preset rule. The indication information may indicate, in the indication manner in the foregoing example in combination with the preset rule, whether to enable receiving of the retransmission, or the indication information may indicate whether to enable receiving of the retransmission when a condition of a specific preset rule is met, or the indication information is not related to whether to enable receiving of the retransmission when a condition of a specific preset rule is not met. The preset rule may be whether a retransmission-related parameter is configured, reference signal receiving quality of the terminal device, or the like. This is not limited in this application.

Optionally, for Manner 2, Manner 3, or Manner 4, the terminal device may also receive configuration information of a timer, where the timer is used to receive the retransmission of the downlink multicast transmission when the terminal device is in the inactive state or the idle state. For the configuration information of the timer, refer to related descriptions in Manner 1 in the foregoing embodiment. Details are not described herein again. Optionally, the configuration information of the timer is carried in radio resource control RRC signaling (for example, an RRC reconfiguration message or an RRC release message), or is carried on a multicast and broadcast service control channel MCCH. It may be understood that the configuration information of the timer and the indication information may be carried in same signaling, or may be carried in different signaling; or may be carried in signaling of a same level, or may be carried in signaling of different levels. Similarly, the configuration information of the timer and the configuration information in Manner 4 may be carried in same signaling, or may be carried in different signaling; or may be carried in signaling of a same level, where for example, both of them are carried in RRC signaling, or may be carried in signaling of different levels. Optionally, when it is indicated to enable receiving of the retransmission, a parameter of the retransmission-related timer is configured; or a parameter of the retransmission-related timer is configured by default, and whether to indicate to enable receiving of the retransmission is not related to whether to configure the timer.

In correspondence to the foregoing indication manner, the terminal device may determine, based on the received indication information and/or configuration information, whether to enable receiving of the retransmission. Details are not described herein in this application.

It may be understood that the terminal may determine, based on an indication result of the indication information, whether to enable receiving of the retransmission, or the terminal may determine, based on an indication result and another condition, whether to enable receiving of the retransmission. For example, when the terminal determines that the result indicated by the network is to enable receiving of the retransmission, the terminal determines, based on a decoding state of received downlink transmission, whether to enable receiving of the retransmission, or determines, based on received signal quality, whether to enable receiving of the retransmission. For example, if decoding succeeds, receiving of the retransmission does not need to be enabled; or if decoding fails, receiving of the retransmission is enabled. Alternatively, if decoding fails, whether to enable the retransmission is determined based on the indication result of the indication information. The terminal may also choose to disable receiving of the retransmission. Even if the terminal receives an indication indicating that the network enables receiving of the retransmission, the terminal device is not forced to receive PTM retransmission. A possible reason is that the terminal in the non-connected state successfully receives corresponding PTM initial transmission, or may be that the terminal in the non-connected state does not need to receive the PTM retransmission because the terminal in the non-connected state does not require extremely high service quality. In a possible case, the terminal learns of application layer information or a service attribute of a received multicast service, and the application layer information or the service attribute corresponds to receiving quality of the multicast service. For example, if the terminal learns that the multicast service is a live TV service, and a corresponding receiving quality requirement is not high, the terminal chooses not to receive the retransmission. For another example, the terminal learns that the multicast service is a high-definition live service or a standard-definition live service, and receiving quality requirements corresponding to the two services may be different. Alternatively, the terminal may learn of a service quality requirement of the received multicast service, for example, QoS of the multicast service. An operation performed by the terminal after the terminal receives the indication information is not limited herein in this application.

It may be understood that, when the indication information, the configuration information in Manner 4, or the configuration information of the timer is newly-defined information used in the non-connected state, the network may indicate/configure different information values for the terminal in the connected state and the terminal in the non-connected state, thereby increasing network indication flexibility.

It may be understood that, when the indication information is carried in the DCI, the indication information may be configured per (per) time of scheduling, that is, the indication information is at a scheduling granularity, and each time of scheduling may indicate a different value of the indication information. An advantage of this is that the indication can be flexibly performed, and different indication information or values of the indication information may be indicated for each time of scheduling. The indication information is carried in the DCI, so that the indication information can be updated when the terminal device is in the non-connected state, thereby improving indication flexibility.

It may be understood that when the indication information, the configuration information in Manner 4, or the configuration information of the timer is carried on the MCCH, the indication information, the configuration information in Manner 4, or the configuration information of the timer may be configured per multicast service, where it may be understood that the indication information is at a multicast service granularity, and different multicast services may indicate different values of the indication information; or may be configured per G-RNTI. It may be understood that the indication information is at a G-RNTI granularity, and different G-RNTIs may indicate different values of the indication information; or may be configured per MBS radio bearer (MRB radio bearer, MRB), or may be configured per multicast session. An advantage of this is that different indication information or values of the indication information may be indicated for different multicast services, G-RNTIs, MRBs, or multicast sessions. The indication information, the configuration information in Manner 4, or the configuration information of the timer is carried on the MCCH, so that the information can be updated when the terminal device is in the non-connected state, thereby improving indication/configuration flexibility.

It may be understood that, when the indication information, the configuration information in Manner 4, or the configuration information of the timer is carried in the RRC signaling, refer to a case in which the indication information, the configuration information in Manner 4, or the configuration information of the timer is carried on the MCCH; and when the indication information, the configuration information in Manner 4, or the configuration information of the timer is carried in the RRC signaling, the information may be configured per UE, that is, the indication information is at a UE granularity, and different UEs may indicate different values of the indication information. In comparison with another level, an advantage of a level configured for each UE is that signaling is simple. The indication information, the configuration information in Manner 4, or the configuration information of the timer is carried in RRC. When the terminal device is in the connected state, related information may be indicated/configured, and the indicated/configured information is used until the terminal device is in the non-connected state. In this way, implementation complexity of receiving the retransmission by the terminal device in the non-connected state can be reduced, and power consumption of the terminal can be reduced. perUE RRC signaling is used, so that when releasing the terminal or when the terminal is in the connected state, the network may indicate a part of terminal devices to disable receiving of the retransmission in the non-connected state; or when releasing the terminal, the network may indicate a part of terminal devices to continuously enable receiving of the retransmission in the non-connected state. An advantage of this is that the network may actively indicate values of the indication information different from those of other terminal devices to some terminal devices, so that different requirements of different terminal devices on receiving quality of the multicast service can be matched.

Optionally, the network may update the configuration information, the indication information, or the configuration information of the timer to the terminal.

In a possible implementation, the indication information may be sent for a plurality of times by using different signaling. The different signaling may be at a same granularity level, or may be at different granularity levels. The different signaling may be signaling of a same type (where the signaling type is, for example, RRC signaling, MCCH signaling, or DCI), or may be signaling of different types. For example, the indication information may be sent by using RRC signaling; and after a period of time, the indication information may be sent by using the RRC signaling, or the indication information may be sent through the MCCH. In this case, indication results of the indication information sent for a plurality of times may be different. For example, the RRC signaling indicates enabled; and after a period of time, the MCCH signaling indicates disabled. It may be understood that the terminal device determines the indication result of the indication information according to a predefined rule, or the terminal device determines the indication information according to an indication of the network. An advantage of this is that network indication/configuration flexibility is increased. For example, the terminal device determines the indication result based on latest indication information in time, or the terminal device determines the indication result based on a granularity level. For example, if two consecutive indication information granularities are the same, the terminal device updates the indication information, or the terminal device determines the indication information based on a pre-specified priority order of the signaling type, or determines the indication information based on a combination of these rules. There may also be another predefined rule. It should be understood that, for the configuration information in Manner 4 or the configuration information of the timer, refer to the indication information. Details are not described herein again.

In a possible case, dedicated signaling (for example, an RRC reconfiguration message or an RRC release message) and MCCH and/or DCI signaling repeatedly indicate information of a same type, and indication results of the dedicated signaling and the MCCH and/or DCI signaling may be the same or may be different. The indication information is used as an example. The indication information carried in the dedicated signaling indicates to enable receiving of the retransmission; and after a period of time, the terminal device may receive the indication information carried on the MCCH and/or in the DCI that indicates to disable receiving of the retransmission.

In this case, in an implementation, a priority corresponding to information carried in the dedicated signaling (for example, an RRC reconfiguration message or an RRC release message) is higher than that corresponding to information carried on the MCCH and/or in the DCI. The indication information is used as an example. The indication information carried in the dedicated signaling indicates to enable receiving of the retransmission; and after a period of time, even if the terminal device receives the indication information carried on the MCCH and/or in the DCI that indicates to disable receiving of the retransmission, the terminal device determines that a result indicated by the indication information is to enable receiving of the retransmission. In this way, when releasing the terminal or when the terminal is in the connected state, the network may indicate the part of terminal devices to disable receiving of the retransmission in the non-connected state; or when releasing the terminal, the network may indicate the part of terminal devices to continuously enable receiving of the retransmission in the non-connected state. An advantage of this is that the network may actively indicate values of the indication information different from those of other terminal devices to some terminal devices, so that different requirements of different terminal devices on receiving quality of the multicast service can be matched.

In this case, in another implementation, a priority corresponding to information carried in the dedicated signaling (for example, an RRC reconfiguration message or an RRC release message) is the same as that corresponding to information carried on the MCCH and/or in the DCI. The indication information is used as an example. The indication information carried in the dedicated signaling indicates to enable receiving of the retransmission; and after a period of time, if the terminal device receives the indication information carried on the MCCH and/or in the DCI that indicates to disable receiving of the retransmission, the terminal device determines that a result indicated by the indication information is to disable receiving of the retransmission. In this way, the network may update the indication result of the indication information when the terminal device is in the non-connected state.

In a possible implementation, a priority of the RRC signaling is higher than a priority of the MCCH signaling. After the network configures the indication information for the terminal device by using the RRC signaling, the indication result of the indication information is not updated. After the network does not configure the indication information for the terminal device by using the RRC signaling, the terminal device may determine the indication result of the indication information based on the MCCH signaling, and the indication result may also be updated by indication information in subsequently received MCCH signaling. An advantage of this is that the network device may not update indication results of a part of terminals in the non-connected state, and indication results of another part of terminals may be updated in the non-connected state, thereby increasing indication flexibility of the indication information.

In a possible implementation, for different terminal devices, priority orders of the RRC signaling and the MCCH signaling may be different. For example, in a cell, a priority of the RRC signaling of some terminal devices is higher than that of the MCCH signaling, and a priority of the RRC signaling of some terminal devices is the same as that of the MCCH signaling. The terminal device may determine the priority orders of the RRC signaling and the MCCH signaling according to a preset rule or according to an indication of the network. An advantage of this is that the network device may not update indication results of a part of terminals in the non-connected state, and indication results of another part of terminals may be updated in the non-connected state, thereby increasing indication flexibility of the indication information.

Optionally, the terminal may further report in advance whether a capability of receiving PTM retransmission in the non-connected state is supported. The terminal capability may be a capability per UE, a capability per band, or a capability per cell, that is, the terminal capability may be a capability at a UE granularity, a band granularity, or a cell granularity. Each UE may have different capabilities, or the UE has different capabilities on different bands, or the UE has different capabilities in different cells. An advantage of this is that the indication can be flexibly performed, and different UE capabilities may be reported in different cases. Alternatively, the terminal may report the capability based on a network request. An advantage of this is that the network learns whether the terminal receives the retransmission, and a situation of the receive end can be accurately considered when the retransmitted data is scheduled, thereby improving scheduling accuracy and improving communication quality of the network MBS.

Optionally, before S210, the network device may further determine whether the terminal device enables receiving of the retransmission. A specific determining manner may be determining based on a receiving quality requirement of the multicast service, or determining based on a service attribute of the multicast service, or determining based on a capability of receiving PTM retransmission reported by the UE, or determining based on another condition. After S210, the network device may further schedule or send retransmission of downlink multicast data.

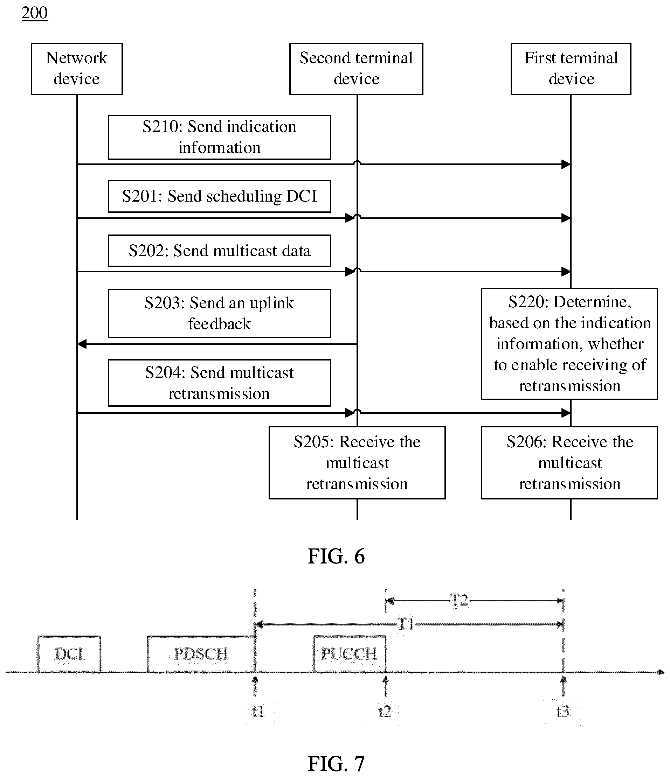

FIG. 6 is another diagram of a communication method 200 according to an embodiment of this application. It may be understood that steps S201 to S206 in FIG. 6 are not necessary steps in this embodiment of this application. It may be understood that FIG. 6 shows only one time sequence relationship in implementations of the steps, and step S220 may be completed in time other than a time sequence shown in FIG. 6. In FIG. 6, a second terminal device is the terminal device in the connected state, and a first terminal device in FIG. 6 is a terminal device in this embodiment of this application. In FIG. 6, in step S201, a network device sends scheduling DCI to schedule transmission of downlink multicast data, and correspondingly the second terminal device and the first terminal device receive the DCI. In S202, the network device sends the multicast data, and correspondingly the second terminal device and the first terminal device receive the multicast data. S203: The second terminal device sends an uplink feedback for the multicast data, and correspondingly the network device receives the uplink feedback. S204: The network device sends multicast retransmission for the multicast data. Correspondingly, in step S205, the second terminal device receives the multicast retransmission. In step S206, the first terminal device receives the multicast retransmission.

For step S210 and step S220 in FIG. 6, refer to step S210 and step S220 in FIG. 5. Through step S210 and step S220, when the terminal is in the non-connected state, the terminal may determine whether the network enables a retransmission mechanism, and determine whether the network performs sending or whether sending of the retransmission may be performed. In this way, the terminal can determine whether the retransmission needs to be received, so that the terminal can monitor a downlink channel based on a requirement of receiving the retransmission by the terminal, thereby reducing energy consumption of the terminal. The terminal in the non-connected state cannot perform HARQ feedback. According to the technical solution in this embodiment of this application, the terminal device can receive, in an RRC non-connected state, PTM retransmission triggered by the terminal in the connected state by using the HARQ feedback, thereby helping improve quality of receiving a multicast service by the terminal device in the non-connected state.

It should be noted that, when the implementation in FIG. 6 may be combined with the foregoing manner in FIG. 5, step S210 and step S201 may be further combined when the indication information in step S210 is the DCI.

After determining to enable receiving of the retransmission, the terminal device may perform the following steps. It may be understood that step S230 and step S240 are optional, and are not shown in FIG. 5 or FIG. 6.

S230: The terminal device receives first information, where the first information indicates a first moment; the terminal device starts a first timer after the first moment; and the terminal device detects a physical downlink control channel PDCCH in a running period of the first timer.

In an alternative embodiment, the terminal device may start the first timer at the first moment, or determine, based on the first moment, a moment for starting the first timer. The first moment may be a specific symbol, or may be another time unit. In an embodiment, the running period of the timer in this application may be a part of time in the running period.

Optionally, the first information may be sent in a PTM manner. Correspondingly, both the terminal in the RRC connected state and the terminal in the RRC non-connected state may receive the same first information.

In an implementation, the first information may be scheduling DCI of downlink multicast transmission, and the DCI indicates the first moment.

Optionally, the first information may be DCI 4-1 or DCI 4-2 scrambled by a G-RNTI.

It may be understood that the scheduling DCI of the downlink multicast transmission includes resource configuration information of a PDSCH, and a time domain position for receiving the PDSCH may be determined by using the information. The DCI further includes HARQ feedback position information. Specifically, the HARQ feedback position information includes one or more of the following:
(1) resource configuration information of a PUCCH, where the information is used to determine a symbol corresponding to the PUCCH, and is mainly used to determine symbol information for transmitting an uplink HARQ feedback; and if the terminal device has determined a specific slot, the terminal device may directly determine a position of the symbol based on the symbol information; and
(2) timing indication information between the PDSCH and the HARQ feedback, where the information is used to determine a specific time difference from receiving the PDSCH to sending the HARQ feedback, and a unit is slot.

It may be understood that another indication manner may be alternatively used for indication. This is not limited in this application.

In an implementation, the first information may be parameter information in RRC signaling or parameter information on an MCCH. The first information may directly indicate the first moment, or the first information indicates the first moment with reference to the scheduling DCI of the downlink multicast transmission. To distinguish between the two implementations, in the following, second information represents the parameter information in the RRC signaling or the parameter information on the MCCH, and the scheduling DCI represents the scheduling DCI of the downlink multicast transmission.

It may be understood that the first moment may be a time point, or may be a symbol or a boundary of the symbol, or may be a slot or a boundary of the slot.

Optionally, the first moment is determined based on the scheduling DCI, or the first moment is determined based on the second information, or the first moment is determined based on the scheduling DCI and the second information. The following uses an example to describe a manner of determining the first moment with reference to FIG. 7. FIG. 7 is a diagram of a time relationship related to a first moment in a communication method according to an embodiment of this application.

Example 1: The terminal device determines the first moment based on a time domain position of a feedback resource indicated in the downlink scheduling information DCI sent by the network device. For example, the terminal device determines, based on the timing indication information that is in the DCI and that is between the PDSCH and the HARQ feedback, a slot in which the feedback is located, and determines the first moment based on the slot. For example, the terminal device uses the slot or a boundary of the slot as the first moment. As shown in FIG. 7, the terminal device determines a slot in which the PUCCH is located, and uses the slot or a boundary of the slot as the first moment. For another example, the terminal device determines, based on the timing indication information and the resource configuration information of the PUCCH in the DCI, a position of a symbol in which the PUCCH is located, and uses the symbol or a boundary of the symbol as the first moment. As shown in t2 in FIG. 7, the terminal device uses the symbol or the boundary of the symbol as the first moment. In still another example, a last symbol of a PDSCH resource indicated in the DCI may be used as the first moment, or a last symbol of the actually received PDSCH may be used as the first moment. As shown in t1 in FIG. 7, the terminal device uses the symbol or the boundary of the symbol as the first moment. An advantage of the indication manner in Example 1 is that signaling resource overheads can be reduced, and no additional indicated content is required to determine the first moment.

Example 2: The terminal device determines the first moment based on an indication of the second information. In an indication manner, the network device indicates a slot index or a symbol index. The first moment may be a slot or a symbol corresponding to the indicated index. As shown in FIG. 7, the network device indicates a slot or a symbol in which t3 is located, or indicates an index of the slot or the symbol in which t3 is located, and the terminal device uses the indicated slot or symbol as the first moment. It may be understood that there is another indication manner. This is not limited in this application. An advantage of the indication manner in Example 2 is that the first moment can be more accurately indicated for the terminal in the non-connected state, thereby improving indication accuracy and flexibility, and improving communication quality.

Example 3: The network device may indicate a time length, for example, third duration, by using the second information. In an indication manner, a quantity of slots included in the time length is indicated, and a unit is slot; or a quantity of symbols included in the time length is indicated. This is not limited in this application. With reference to Example 1, the time length indicated by the second information may be pushed backward based on the moment determined in the implementation in Example 1, and an end moment of the time length is used as the first time point. As shown in FIG. 7, the third duration is T1, a start point of T1 is a last symbol (t1 in FIG. 7) for PDSCH transmission, and an end point of T1 is the first moment (t3 in FIG. 7). As also shown in FIG. 7, the third duration is T2, a start point of T2 is a last symbol (t2 in FIG. 7) for PUCCH transmission, and an end point of T2 is the first moment (t3 in FIG. 7). An advantage of this is that the first moment can be more accurately indicated for the terminal in the non-connected state, thereby improving indication accuracy and flexibility, and improving communication quality. With reference to the indicated content of the scheduling DCI, a short time length may be indicated in the second information, so that signaling resource overheads can be reduced or indication accuracy can be improved with same signaling overheads.

Optionally, the terminal device may start the first timer at the first moment, or the terminal device may start the first timer after the first moment.

Optionally, the terminal device may start a second timer at the first moment, or the terminal device may start the second timer after the first moment; the terminal device starts the first timer after the second timer expires; and the terminal device detects a physical downlink control channel PDCCH in a running period of the first timer.

In an alternative embodiment, the terminal device may start the related timer at the moment described in this embodiment of this application, or determine, based on the moment described in this embodiment of this application, the moment for starting the related timer. The moment described in this embodiment of this application may be a specific symbol, or may be another time unit. In an embodiment, the running period of the timer in this application may be a part of time in the running period.

It may be understood that a specific error needs to be allowed between actual time in which the timer is started and start time described in this embodiment of this application. The error may be caused by a hardware limitation or the like. Therefore, it may be understood that implementations of starting the timer in the start time described in this embodiment of this application all fall within the protection scope of this application.

Optionally, when the terminal device determines to start receiving of the retransmission of the downlink multicast transmission, and the terminal device fails to decode the downlink multicast transmission, the terminal device receives the retransmission of the downlink multicast transmission, or the terminal device detects the physical downlink control channel PDCCH in the running period of the first timer, or the terminal device expects to receive the retransmitted data.

Correspondingly, the network device performs the following step.

S240: The network device sends first information, where the first information indicates the first moment; and the network device starts the first timer after the first moment. For a possible implementation, refer to step S230. Details are not described herein again.

Optionally, the first moment is indicated by using the scheduling DCI, or the first moment is indicated by using the second information, or the first moment is indicated by using the scheduling DCI and the second information.

Optionally, the network device determines the moment for sending the retransmitted data. The network device may determine, based on the following information, the moment for sending the retransmitted data: the time domain position fed back by the terminal in the connected state (or active time of the retransmission timer of the terminal in the connected state) and the first moment determined by the terminal in the non-connected state (or active time of the first timer of the terminal in the non-connected state). The network device needs to send the retransmitted data as much as possible in a time period in which the terminal in the non-connected state and the terminal in the connected state are in a DRX active state, thereby improving receiving of the PTM retransmission, and improving receiving quality of the MBS.

Optionally, the network device schedules transmission of the transmitted data in the running period of the first timer.

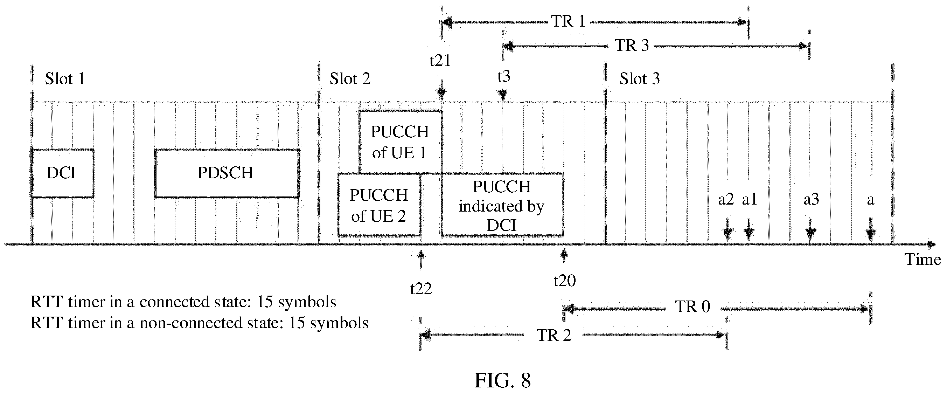

FIG. 8 is another diagram of a communication method according to an embodiment of this application. A network sends scheduling DCI in a PTM manner, and performs downlink multicast transmission. In FIG. 8, a UE 1 and a UE 2 are terminals in a connected state, and the UE 1 and the UE 2 perform uplink feedback according to an indication of the DCI and a preset specification. As shown in FIG. 8, a PUCCH of the UE 1 and a PUCCH of the UE 2 are actual uplink feedback transmission positions, and end points t21 and t22 of uplink feedback transmission of the UE 1 and the UE 2 are different. In FIG. 8, assuming that a time length of a HARQ-RTT timer in a connected state is 15 symbols, lengths of a TR 1 and a TR 2 in the corresponding figure are 15 symbols, and the HARQ-RTT timer is started in a 1^{st} symbol after the uplink feedback transmission ends, end points a1 and a2 of the HARQ-RTT timers of the UE 1 and the UE 2 are also different, and a1 and a2 are also time of retransmission timers of the UE 1 and the UE 2. When the terminal in the non-connected state does not complete uplink feedback transmission, assuming that the first moment indicated by the base station for the terminal in the non-connected state is t3, a time length of the second timer TR 3 in the non-connected state is 15 symbols, a length of the TR 3 in the corresponding figure is 15 symbols, and the second timer in the non-connected state is started at t3, an end point of the second timer of the terminal in the non-connected state is a3. For the terminal in the non-connected state, a3 is also time in which the first timer in the non-connected state is started. Therefore, as described above, to meet a requirement of receiving the retransmission by the terminal (the UE 1, the UE 2, and the terminal in the non-connected state) that needs to receive the retransmission, when determining a moment for sending the retransmitted data, the network device needs to consider t21, t22, and t3 in FIG. 8, or needs to consider a1, a2, and a3 in FIG. 8. In this implementation, the network device sends the retransmitted data in an overlapping part of active time of the retransmission timer and/or active time of the first timer, thereby improving receiving quality of the MBS.

Optionally, when the network provides a multicast service for the terminal in the non-connected state, PTM retransmission is used as much as possible. Optionally, the DCI for scheduling the multicast retransmission by the network is a PDCCH/DCI scrambled by a common RNTI (for example, a Group-RNTI (G-RNTI) or a second RNTI). Optionally, when the terminal in the connected state needs to receive the retransmission, the terminal in the connected state may suspend/stop a procedure related to receiving of the PTP retransmission when determining, by receiving indication information and/or configuration information, that the network is providing the multicast service for the terminal in the non-connected state. In an implementation, determining that the network is providing the multicast service for the terminal in the non-connected state may be further determined based on the indication information, or may be further determined based on another determining condition such as whether receiving of the retransmission is enabled. Specifically, only the HARQ-RTT timer and the retransmission timer that are related to the PTM retransmission may be started, or the HARQ-RTT timer and the retransmission timer that are related to the PTP retransmission may not be started. An advantage of this is that time in which the terminal in the connected state is in the active state is shortened, or implementation complexity of receiving the retransmission by the terminal in the connected state is reduced, thereby reducing energy consumption of the terminal in the connected state.

Optionally, first duration is a time length of a timer configured by the network device for the terminal in the non-connected state, and second duration is a time length of a timer configured by the network device for the terminal in the connected state. The first duration is equal to the second duration, or a difference between the first duration and the second duration is not greater than d symbols, where d is an integer greater than or equal to 0. An advantage of this is that a difference between timer duration of the terminal in the connected state and timer duration of the terminal in the non-connected state is reduced, so that the terminal in the connected state and the terminal in the non-connected state have overlapping time for receiving the retransmission as long as possible. This facilitates scheduling of the retransmitted data by the network device, increases a probability that the terminal in the connected state and the terminal in the non-connected state normally receive the retransmission, and improves receiving quality of the multicast data. FIG. 8 is used as an example. An equal or difference relationship between a time length configured by the HARQ-RTT timer in the connected state and a time length configured by the second timer in the non-connected state are equal or different ensures that scheduling of the retransmitted data by the network, thereby improving receiving quality of the multicast transmission.

As described above, the scheduling DCI indicates the time position of the HARQ feedback, but the time position of the HARQ feedback actually performed by the terminal in the connected state may be different from that indicated in the scheduling DCI. The terminal device in the non-connected state may start the second timer based on a last symbol of the HARQ feedback indicated in the scheduling DCI, and start the first timer after the second timer expires. For ease of understanding, the following uses a reference time point a to represent start time, of the first timer, that is determined based on the time position of the HARQ feedback indicated in the scheduling DCI. Optionally, the time that is for starting the first timer and that is indicated by the network device in various possible implementations in the foregoing embodiment is b symbols earlier than the reference time point a, where b is an integer greater than or equal to 0. An advantage of this is that a difference between time in which the terminal in the connected state starts the timer and time in which the terminal in the non-connected state starts the timer is reduced, so that the terminal in the connected state and the terminal in the non-connected state have overlapping time for receiving the retransmission as long as possible. This facilitates scheduling of the retransmitted data by the network device, increases a probability that the terminal in the connected state and the terminal in the non-connected state normally receive the retransmission, and improves multicast receiving quality. FIG. 8 is used as an example. A PUCCH resource position indicated in the scheduling DCI may be different from an actual uplink feedback transmission position. In FIG. 8, an end point of uplink feedback transmission indicated by the scheduling DCI is t20. In FIG. 8, assuming that a time length of a HARQ-RTT timer in a connected state is 15 symbols, a length of a TR 0 in the corresponding figure is 15 symbols, and the HARQ-RTT timer is started in a 1^{st} symbol after the uplink feedback transmission ends, the reference time point a is a position at which the TR 0 ends. Therefore, as described above, the network configures the first moment and the timer duration (t3 and a TR 3 in FIG. 8) for the terminal in the non-connected state, and indicates, by using the first moment and the timer duration, a position (a3 in FIG. 8) at which the first timer is started, and the first moment and the timer duration may be several symbols earlier than the reference time point a (a3 in FIG. 8 is three symbols earlier than a). It can be seen from FIG. 8 that, an advantage of this is that, compared with the moment a, a time difference between the moment a3 and the moment a1 (a2) is smaller, which helps align moments at which the terminals start timers, and improves multicast receiving quality.

An existing terminal in a connected state starts to receive retransmission based on a timer started after sending of a HARQ feedback. This embodiment of this application can resolve a problem of an occasion at which a terminal in a non-connected state starts to receive retransmission without sending a HARQ feedback. In consideration that the terminal in the non-connected state also receives the PTM retransmission, through step S230 and step S240, the network may determine the position at which the terminal in the non-connected state receives the retransmission, so that both the network side and the terminal side can normally process the retransmission. An advantage of this is that the terminal device can determine time for starting the timer, and can monitor the PDCCH in more accurate time, thereby better receiving the retransmitted data, and improving the multicast receiving quality.

It should be understood that any method in embodiments of this application may be applied to a case in which the HARQ of the terminal in the connected state is disabled. That is, the terminal in the non-connected state may be replaced with the terminal in the connected state with the HARQ disabled, and the RRC inactive state or idle state may be replaced with the RRC connected state with the HARQ disabled; and the terminal in the connected state may be replaced with the terminal in the connected state with the HARQ enabled, and the RRC connected state may be replaced with the RRC connected state with the HARQ enabled. Correspondingly, beneficial effect is as follows: The terminal in the connected state with the HARQ disabled can receive the retransmitted data triggered by the terminal in the connected state with the HARQ enabled, thereby improving receiving quality of the MBS of the terminal in the connected state with the HARQ disabled.

It should be understood that the network device mentioned in embodiments of this application may be a base station, and steps performed by any network device may be performed by the base station, or may be performed by a CU of the base station, or may be performed by a module of the base station.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that in the foregoing method embodiments, the method and the operation implemented by the terminal device may be implemented by a component (for example, a chip or a circuit) of the terminal device. In addition, the method and the operation implemented by the network device may also be implemented by a component (for example, a chip or a circuit) of the network device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features and beneficial effect described in the foregoing method embodiments are also applicable to the following apparatus embodiments.

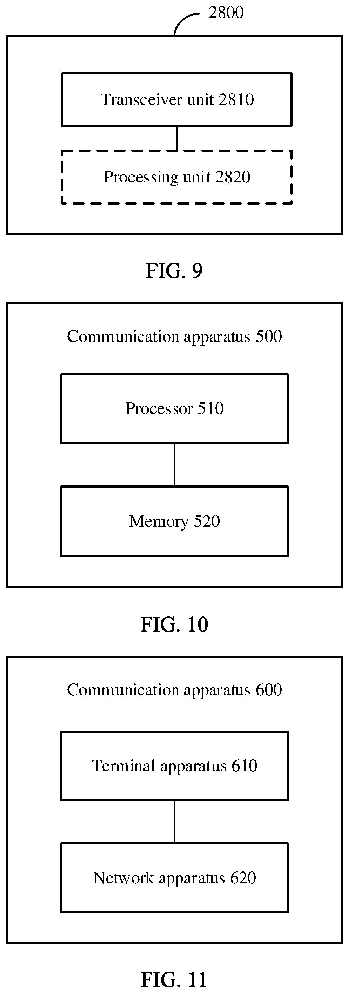

FIG. 9 is a diagram of a communication apparatus 2800 according to an embodiment of this application. The apparatus 2800 includes a transceiver unit 2810, and the transceiver unit 2810 may be configured to implement a corresponding communication function. The transceiver unit 2810 may also be referred to as a communication interface or a communication unit. Optionally, the apparatus 2800 may further include a processing unit 2820, and the processing unit 2820 may be configured to perform data processing.

In this embodiment of this application, the transceiver unit may be a sending unit when performing a sending step, and may be a receiving unit when performing a receiving step. In addition, the transceiver unit may be replaced with a transceiver, the sending unit may be replaced with a transmitter, and the receiving unit may be replaced with a receiver.

Optionally, the communication apparatus may be used in the terminal device in the method embodiment in FIG. 5, or may be a component, for example, a chip, that implements the method in the embodiment in FIG. 5. The communication apparatus 2800 includes:
a transceiver unit 2810, configured to receive indication information; and a processing unit 2820, configured to determine, based on the indication information, whether to enable receiving of retransmission of downlink multicast transmission when the terminal device is in an inactive state or an idle state.

Optionally, the indication information is carried in downlink scheduling information DCI.

Optionally, the transceiver unit 2810 is further configured to receive configuration information, where the configuration information indicates that the indication information in the DCI is valid, or the configuration information indicates that the DCI includes the indication information.

Optionally, the configuration information is carried in radio resource control RRC signaling, or is carried on a multicast and broadcast service control channel MCCH.

Optionally, the configuration information is hybrid automatic repeat request HARQ feedback enabling information.

Optionally, the transceiver unit 2810 is further configured to receive configuration information of a timer, where the timer is used to receive the retransmission of the downlink multicast transmission when the terminal device is in the inactive state or the idle state.

Optionally, the indication information is carried in radio resource control RRC signaling, or is carried on a multicast and broadcast service control channel MCCH.

Optionally, the indication information is HARQ feedback enabling information; and when the HARQ feedback enabling information indicates a first state, the indication information indicates to enable receiving of the retransmission of the downlink multicast transmission when the terminal device is in the inactive state or the idle state.

Optionally, the transceiver unit 2810 is further configured to receive configuration information of a timer, where the timer is used to receive the retransmission of the downlink multicast transmission when the terminal device is in the inactive state or the idle state.

Optionally, the indication information is configuration information of a timer, and the timer is used to receive the retransmission of the downlink multicast transmission when the terminal device is in the inactive state or the idle state. The processing unit 2820 is further configured to determine, based on the configuration information of the timer, whether to enable receiving of the retransmission of the downlink multicast transmission.

Optionally, the configuration information of the timer includes configuration information of a first timer, and the first timer indicates the terminal device to receive the retransmission of the downlink multicast transmission in a running period of the first timer. The transceiver unit 2810 is further configured to receive first information, where the first information indicates a first moment. The processing unit 2820 is further configured to start the first timer after the first moment. The processing unit 2820 is further configured to detect a physical downlink control channel PDCCH in a running period of the first timer.

Optionally, the first information is carried in downlink scheduling information DCI.

Optionally, the configuration information of the timer includes configuration information of a second timer, and the second timer indicates that the terminal device does not need to perform PDCCH detection in a running period of the second timer. The processing unit 2820 is further configured to start the second timer after the first moment. The processing unit 2820 is further configured to start the first timer after the second timer expires. The processing unit 2820 is further configured to detect a physical downlink control channel PDCCH in a running period of the first timer.

Optionally, the processing unit 2820 is further configured to receive the retransmission of the downlink multicast transmission when the terminal device determines to enable receiving of the retransmission of the downlink multicast transmission, and the terminal device fails to decode the downlink multicast transmission.

Optionally, the communication apparatus may be used in the network device in the method embodiment in FIG. 5, or may be a component, for example, a chip, that implements the method in the embodiment in FIG. 5. The communication apparatus 2800 includes:

The transceiver unit 2810 is configured to send indication information, where the indication information indicates whether a terminal device enables receiving of retransmission of downlink multicast transmission when the terminal device is in an inactive state or an idle state.

Optionally, the indication information is carried in downlink scheduling information DCI.

Optionally, the transceiver unit 2810 is further configured to send configuration information, where the configuration information indicates that the indication information in the DCI is valid, or the configuration information indicates that the DCI includes the indication information.

Optionally, the configuration information is carried in radio resource control RRC signaling, or is carried on a multicast and broadcast service control channel MCCH.

Optionally, the configuration information is hybrid automatic repeat request HARQ feedback enabling information.

Optionally, the transceiver unit 2810 is further configured to send configuration information of a timer, where the timer is used to receive the retransmission of the downlink multicast transmission when the terminal device is in the inactive state or the idle state.

Optionally, the indication information is carried in radio resource control RRC signaling, or is carried on a multicast and broadcast service control channel MCCH.

Optionally, the indication information is HARQ feedback enabling information; and when the HARQ feedback enabling information indicates a first state, the indication information indicates to enable receiving of the retransmission of the downlink multicast transmission when the terminal device is in the inactive state or the idle state.

Optionally, the transceiver unit 2810 is further configured to send configuration information of a timer, where the timer is used to receive the retransmission of the downlink multicast transmission when the terminal device is in the inactive state or the idle state.

Optionally, the indication information is configuration information of a timer, and the timer is used to receive the retransmission of the downlink multicast transmission when the terminal device is in the inactive state or the idle state. The processing unit 2820 is further configured to indicate, by using the configuration information of the timer, whether to enable receiving of the retransmission of the downlink multicast transmission.

Optionally, the configuration information of the timer includes configuration information of a first timer, and the first timer indicates the terminal device to receive the retransmission of the downlink multicast transmission in a running period of the first timer. The transceiver unit 2810 is further configured to send first information, where the first information indicates a first moment. The processing unit 2820 is further configured to start the first timer after the first moment. The processing unit 2820 is further configured to schedule the retransmission of the downlink multicast transmission in a running period of the first timer.

Optionally, the first information is carried in downlink scheduling information DCI.

Optionally, the configuration information of the timer includes configuration information of a second timer, and the second timer indicates that the terminal device does not need to perform PDCCH detection in a running period of the second timer. The processing unit 2820 is further configured to start the second timer after the first moment. The processing unit 2820 is further configured to start the first timer after the second timer expires. The processing unit 2820 is further configured to schedule the retransmission of the downlink multicast transmission in a running period of the first timer.

An embodiment of this application provides a communication apparatus 500. FIG. 10 is a block diagram of another communication apparatus according to an embodiment of this application. The communication apparatus 500 includes a processor 510. The processor 510 is coupled to at least one memory 520. The processor 510 is configured to read a computer program stored in the at least one memory 520, to perform the method in any possible implementation of embodiments of this application.

The processor 510 may be an integrated circuit chip, and has a signal processing capability. In an implementation process, steps in the foregoing method embodiments can be implemented through a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory 520 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application provides a communication chip. The communication chip includes a processor and a communication interface. The processor is configured to read instructions or a computer program, to perform the method in embodiments of this application.

An embodiment of this application provides a communication system 600. The communication system 600 includes a terminal apparatus 610 and a network apparatus 620 in the communication method provided in embodiments of this application. FIG. 11 is a block diagram of a communication system 600 according to an embodiment of this application.

An embodiment of this application further provides a computer-readable storage medium. The computer-readable storage medium stores a computer program used to implement the method in embodiments of this application. When the computer program is run on a computer, the computer is enabled to implement the method in the foregoing method embodiments.

An embodiment of this application further provides a computer program product. When the computer program product runs on a computer, the computer is enabled to perform the method in embodiments of this application.

It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

A person skilled in the art may understand that various numbers such as first and second in this application are merely used for distinguishing for ease of description, and are not used to limit the scope of embodiments of this application. A specific value of a number (which may also be referred to as an index), a specific value of a quantity, and a position in this application are merely used as examples, but are not unique representation forms, and are not used to limit the scope of embodiments of this application. Various numbers such as first and second in this application are also merely used for distinguishing for ease of description, and are not used to limit the scope of embodiments of this application.

In addition, the term "and/or" in this application describes only an association relationship for describing associated objects and indicates that three relationships may exist. For example, A and/or B may indicate the following three cases: Only A exists, both A and B exist, and only B exists. In addition, the character "/" in this specification usually represents an "or" relationship between the associated objects. The term "at least one" in this application may represent "one" and "two or more". For example, at least one of A, B, and C may represent the following seven cases: Only A exists, only B exists, only C exists, both A and B exist, both A and C exist, both C and B exist, and A, B, and C all exist.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly learn that, for the purpose of convenient and brief description, for a specific working process of the foregoing system, apparatuses, and units, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, indication information; and
determining, by the terminal device based on the indication information, whether to enable receiving of retransmission of downlink multicast transmission when the terminal device is in an inactive state or an idle state.

2. The method according to claim 1, wherein the indication information is carried in downlink scheduling information DCI.

3. The method according to claim 2, wherein the method further comprises: receiving, by the terminal device, configuration information, wherein the configuration information indicates that the indication information in the DCI is valid, or the configuration information indicates that the DCI comprises the indication information.

4. The method according to claim 3, wherein the configuration information is carried in radio resource control RRC signaling, or is carried on a multicast and broadcast service control channel MCCH.

5. The method according to claim 3 or 4, wherein the configuration information is hybrid automatic repeat request HARQ feedback enabling information.

6. The method according to any one of claims 2 to 5, wherein the method further comprises: receiving, by the terminal device, configuration information of a timer, wherein the timer is used to receive the retransmission of the downlink multicast transmission when the terminal device is in the inactive state or the idle state.

7. The method according to claim 1, wherein the indication information is carried in radio resource control RRC signaling, or is carried on a multicast and broadcast service control channel MCCH.

8. The method according to claim 1 or 7, wherein the indication information is HARQ feedback enabling information; and when the HARQ feedback enabling information indicates a first state, the indication information indicates to enable receiving of the retransmission of the downlink multicast transmission when the terminal device is in the inactive state or the idle state.

9. The method according to claim 8, wherein the method further comprises: receiving, by the terminal device, configuration information of a timer, wherein the timer is used to receive the retransmission of the downlink multicast transmission when the terminal device is in the inactive state or the idle state.

10. The method according to claim 1 or 7, wherein
the indication information is configuration information of a timer, and the timer is used to receive the retransmission of the downlink multicast transmission when the terminal device is in the inactive state or the idle state; and the method comprises:
determining, by the terminal device based on the configuration information of the timer, whether to enable receiving of the retransmission of the downlink multicast transmission.

11. The method according to claim 6, 9, or 10, wherein
the configuration information of the timer comprises configuration information of a first timer, and the first timer indicates the terminal device to receive the retransmission of the downlink multicast transmission in a running period of the first timer; and the method further comprises:
receiving, by the terminal device, first information, wherein the first information indicates a first moment;
starting, by the terminal device, the first timer after the first moment; and
detecting, by the terminal device, a physical downlink control channel PDCCH in the running period of the first timer.

12. The method according to claim 11, wherein the first information is carried in downlink scheduling information DCI.

13. The method according to claim 11 or 12, wherein
the configuration information of the timer comprises configuration information of a second timer, and the second timer indicates that the terminal device does not need to perform PDCCH detection in a running period of the second timer; and
the method further comprises:
starting, by the terminal device, the second timer after the first moment;
starting, by the terminal device, the first timer after the second timer expires; and
detecting, by the terminal device, the physical downlink control channel PDCCH in the running period of the first timer.

14. The method according to any one of claims 1 to 13, wherein the method further comprises: receiving, by the terminal device, the retransmission of the downlink multicast transmission when the terminal device determines to enable receiving of the retransmission of the downlink multicast transmission, and the terminal device fails to decode the downlink multicast transmission.

15. A communication method, comprising:
sending indication information, wherein the indication information indicates whether a terminal device enables receiving of retransmission of downlink multicast transmission when the terminal device is in an inactive state or an idle state.

16. The method according to claim 15, wherein the indication information is carried in downlink scheduling information DCI.

17. The method according to claim 16, wherein the method further comprises: sending configuration information, wherein the configuration information indicates that the indication information in the DCI is valid, or the configuration information indicates that the DCI comprises the indication information.

18. The method according to claim 17, wherein the configuration information is carried in radio resource control RRC signaling, or is carried on a multicast and broadcast service control channel MCCH.

19. The method according to claim 17 or 18, wherein the configuration information is hybrid automatic repeat request HARQ feedback enabling information.

20. The method according to any one of claims 16 to 19, wherein the method further comprises: sending configuration information of a timer, wherein the timer is used to receive the retransmission of the downlink multicast transmission when the terminal device is in the inactive state or the idle state.

21. The method according to claim 15, wherein the indication information is carried in radio resource control RRC signaling, or is carried on a multicast and broadcast service control channel MCCH.

22. The method according to claim 15 or 21, wherein the indication information is HARQ feedback enabling information; and when the HARQ feedback enabling information indicates a first state, the indication information indicates to enable receiving of the retransmission of the downlink multicast transmission when the terminal device is in the inactive state or the idle state.

23. The method according to claim 22, wherein the method further comprises: sending configuration information of a timer, wherein the timer is used to receive the retransmission of the downlink multicast transmission when the terminal device is in the inactive state or the idle state.

24. The method according to claim 15 or 21, wherein
the indication information is configuration information of a timer, and the timer is used to receive the retransmission of the downlink multicast transmission when the terminal device is in the inactive state or the idle state; and the method comprises:
indicating, by using the configuration information of the timer, whether to enable receiving of the retransmission of the downlink multicast transmission.

25. The method according to claim 20, 23, or 24, wherein
the configuration information of the timer comprises configuration information of a first timer, and the first timer indicates the terminal device to receive the retransmission of the downlink multicast transmission in a running period of the first timer; and the method further comprises:
sending first information, wherein the first information indicates a first moment;
starting the first timer after the first moment; and
scheduling the retransmission of the downlink multicast transmission in the running period of the first timer.

26. The method according to claim 25, wherein the first information is carried in downlink scheduling information DCI.

27. The method according to claim 25 or 26, wherein
the configuration information of the timer comprises configuration information of a second timer, and the second timer indicates that the terminal device does not need to perform PDCCH detection in a running period of the second timer; and
the method further comprises:
starting the second timer after the first moment;
starting the first timer after the second timer expires; and
scheduling the retransmission of the downlink multicast transmission in the running period of the first timer.

28. A terminal device, comprising a processor, wherein the processor is coupled to at least one memory, and the processor is configured to read a computer program stored in the at least one memory, to perform the method according to any one of claims 1 to 14.

29. A network device, comprising a processor, wherein the processor is coupled to at least one memory, and the processor is configured to read a computer program stored in the at least one memory, to perform the method according to any one of claims 15 to 27.

30. A communication apparatus, comprising at least one processor and an interface circuit, wherein the interface circuit is configured to provide an input or an output of instructions and/or data for the at least one processor; and when the at least one processor executes the instructions, the apparatus is enabled to implement the method according to any one of claims 1 to 27.

31. A computer-readable storage medium, comprising instructions, wherein when the instructions are run on a computer, the computer is enabled to perform the method according to any one of claims 1 to 14, or the computer is enabled to perform the method according to any one of claims 15 to 27.

32. A computer program product, comprising instructions, wherein when the instructions are run on a computer, the computer is enabled to perform the method according to any one of claims 1 to 14, or the computer is enabled to perform the method according to any one of claims 15 to 27.

33. A chip, comprising a processor and a communication interface, wherein the processor is configured to read instructions or a computer program, to perform the method according to any one of claims 1 to 14, or enable the computer to perform the method according to any one of claims 15 to 27.

34. A communication system, comprising the terminal device according to claim 28 and the network device according to claim 29.
